# EUROPEAN PATENT APPLICATION

(11) **EP 3 927 054 A1**
(43) Date of publication of application: **22.12.2021**
(21) Application number: 20754889.2
(22) Date of filing: 12.02.2020
(51) Int. Cl.: H04W 72/04

(54) **TERMINAL DEVICE, BASE STATION DEVICE, AND COMMUNICATION METHOD**

(30) Priority: 14.02.2019 JP 2019024513
(71) Applicant: Sharp Kabushiki Kaisha, Sakai-shi Osaka 590-8522 (JP); FG Innovation Company Limited, Hong Kong (CN)
(72) Inventor: YOSHIMURA, Tomoki, Sakai City, Osaka 590-8522 (JP); NAKASHIMA, Daiichiro, Sakai City, Osaka 590-8522 (JP); SUZUKI, Shoichi, Sakai City, Osaka 590-8522 (JP); NOGAMI, Toshizo, Sakai City, Osaka 590-8522 (JP); OUCHI, Wataru, Sakai City, Osaka 590-8522 (JP); LEE, Taewoo, Sakai City, Osaka 590-8522 (JP); LIN, Huifa, Sakai City, Osaka 590-8522 (JP)
(74) Representative: Müller-Boré & Partner Patentanwälte PartG mbB
(86) International application number: PCT/JP2020/005401
(87) International publication number: WO 2020/166626

(57) **Abstract**

A terminal apparatus of the present invention performs communication effectively. The terminal apparatus includes: a receiving portion for receiving a PDSCH including a transport block; and a transmitting portion for transmitting, on a PUCCH, HARQ-ACK information corresponding to the transport block. The PDSCH is allocated to first resources other than second resources. The second resources include resources used for one or more SS/PBCH blocks when an n^{th} bit of a higher layer parameter is set to a specific value. The n^{th} bit corresponds to the one or more SS/PBCH blocks, where each of the one or more SS/PBCH blocks has a first index corresponding to (n-1). The first index is determined by a remainder acquired by dividing a second index by a value indicated by a PBCH in each of the one or more SS/PBCH blocks. The second index is notified based on at least a reference signal of the PBCH in each of the one or more SS/PBCH blocks.

## Description

### CROSS-REFERENCE TO RELATED APPLICATION(S)

The present application claims priority to Japanese Patent Application No. 2019-24513 filed in Japan on February 14, 2019, the content of which is incorporated herein by reference.

### TECHNICAL FIELD

The present invention relates to a terminal apparatus, a base station apparatus, and a communication method.

### BACKGROUND

A radio access method and a radio network for cellular mobile communication (hereinafter referred to as "Long Term Evolution (LTE)" or "Evolved Universal Terrestrial Radio Access (EUTRA)") have been studied in the 3^{rd} Generation Partnership Project (3GPP). In LTE, a base station apparatus is also referred to as Evolved Node B (eNodeB), and a terminal apparatus is referred to as User Equipment (UE). LTE is a cellular communication system in which areas within the coverage of the base station apparatus are arranged in the form of cells. A single base station apparatus may also manage a plurality of serving cells.

In the 3GPP, for proposal to International Mobile Telecommunication (IMT)-2020, which is a standard for next-generation mobile communication system developed by the International Telecommunications Union (ITU), a next-generation standard (New Radio (NR)) has been studied (Non-Patent Document 1). The NR has been requested to meet requirements assuming three scenarios: enhanced Mobile BroadBand (eMBB), massive Machine Type Communication (mMTC), and Ultra Reliable and Low Latency Communication (URLLC) in a single technology framework.

### PRIOR ART DOCUMENTS

### NON-PATENT DOCUMENTS

Non-Patent Document 1: "New SID proposal: Study on New Radio Access Technology", RP-160671, NTT docomo, 3GPP TSG RAN Meeting #71, Goteborg, Sweden, 7th-10th March, 2016.

### SUMMARY

### TECHNICAL PROBLEM TO BE SOLVED BY THE PRESENT INVENTION

An aspect of the present invention provides a terminal apparatus for performing communication effectively, a communication method for the terminal apparatus, a base station apparatus for performing communication effectively and a communication method for the base station apparatus.

### SOLUTION TO THE PROBLEM

A first aspect of the present invention is a terminal apparatus, comprising: a receiving portion for receiving a Physical Downlink Shared Channel (PDSCH) comprising a transport block; and a transmitting portion for transmitting, on a Physical Uplink Control Channel (PUCCH), Hybrid Automatic Repeat reQuest (HARQ)- acknowledgement (ACK) information corresponding to the transport block, wherein the PDSCH is allocated to first resources other than second resources; the second resources comprise resources used for one or more Synchronization Signal (SS)/Physical Broadcast Channel (PBCH) blocks when an n^{th} bit of a higher layer parameter is set to a specific value; the n^{th} bit corresponds to the one or more SS/PBCH blocks, where each of the one or more SS/PBCH blocks has a first index corresponding to (n-1); the first index is determined by a remainder acquired by dividing a second index by a value indicated by a PBCH in each of the one or more SS/PBCH blocks; the second index is notified based on at least a reference signal of the PBCH in each of the one or more SS/PBCH blocks.

A second aspect of the present invention is a base station apparatus, comprising: a transmitting portion for transmitting a PDSCH comprising a transport block; and a receiving portion for receiving, on a PUCCH, HARQ-ACK information corresponding to the transport block, wherein the PDSCH is allocated to first resources other than second resources; the second resources comprise resources used for one or more SS/PBCH blocks when the n^{th} bit of a higher layer parameter is set to a specific value; the n^{th} bit corresponds to the one or more SS/PBCH blocks, where each of the one or more SS/PBCH blocks has a first index corresponding to (n-1); the first index is determined by a remainder acquired by dividing a second index by a value indicated by a PBCH in each of the one or more SS/PBCH blocks; the second index is notified based on at least a reference signal of the PBCH in each of the one or more SS/PBCH blocks.

A third aspect of the present invention is a method used by a terminal apparatus, the method comprising: receiving a PDSCH comprising a transport block; and transmitting, on a PUCCH, HARQ-ACK information corresponding to the transport block, wherein the PDSCH is allocated to first resources other than second resources; the second resources comprise resources used for one or more SS/PBCH blocks when an n^{th} bit of a higher layer parameter is set to a specific value; the n^{th} bit corresponds to the one or more SS/PBCH blocks, where each of the one or more SS/PBCH blocks has a first index corresponding to (n-1); the first index is determined by a remainder acquired by dividing a second index by a value indicated by a PBCH in each of the one or more SS/PBCH blocks; the second index is notified based on at least a reference signal of the PBCH in each of the one or more SS/PBCH blocks.

A fourth aspect of the present invention is a method used by a base station apparatus, comprising: transmitting a PDSCH comprising a transport block; and receiving, on a PUCCH, HARQ-ACK information corresponding to the transport block, wherein the PDSCH is allocated to first resources other than second resources; the second resources comprise resources used for one or more SS/PBCH blocks when an n^{th} bit of a higher layer parameter is set to a specific value; the n^{th} bit corresponds to the one or more SS/PBCH blocks, where each of the one or more SS/PBCH blocks has a first index corresponding to (n-1); the first index is determined by a remainder acquired by dividing a second index by a value indicated by a PBCH in each of the one or more SS/PBCH blocks; the second index is notified based on at least a reference signal of the PBCH in each of the one or more SS/PBCH blocks.

### EFFECT OF THE INVENTION

According to an aspect of the present invention, the terminal apparatus can perform communication effectively. In addition, the base station apparatus can perform communication effectively.

### BRIEF DESCRIPTION OF THE DRAWINGS

FIG. 1 is a conceptual diagram of a radio communication system according to an aspect of the present invention.
FIG. 2 is an example illustrating a relationship between N^{slot}_{symb}, a subcarrier spacing configuration µ, and a CP configuration according to an aspect of the present invention.
FIG. 3 is a schematic diagram illustrating an example of a resource grid in a subframe according to an aspect of the present invention.
FIG. 4 is a diagram illustrating an example of a relationship between a PUCCH format and a length N^{PUCCH}_{symb} of the PUCCH format according to an aspect of the present invention.
FIG. 5 is a diagram illustrating an example of a monitoring occasion for a search space set according to an aspect of the present invention.
FIG. 6 is a schematic block diagram illustrating a configuration of a terminal apparatus 1 according to an aspect of the present invention.
FIG. 7 is a schematic block diagram illustrating a configuration of a base station apparatus 3 according to an aspect of the present invention.
FIG. 8 is a diagram illustrating an example of candidate mapping of an SS/PBCH block according to an aspect of the present invention.
FIG. 9 is a diagram illustrating an example of transmission of an SS/PBCH block according to an aspect of the present invention.

### DETAILED DESCRIPTION

Embodiments of the present invention will be described below.

"A and/or B" may also be a term referring to "A", "B", or "A and B".

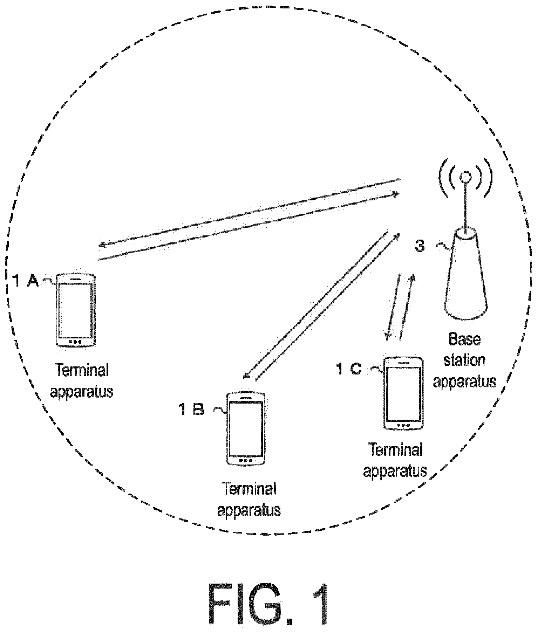

FIG. 1 is a conceptual diagram of a radio communication system according to an aspect of the present invention. In FIG. 1, the radio communication system has terminal apparatuses 1A to 1C and a base station apparatus 3 (BS#3: Base station #3). Hereinafter, the terminal apparatuses 1A to 1C are also referred to as a terminal apparatus 1 (UE#1: User Equipment #1).

The base station apparatus 3 may also be configured to include one or both of a Master Cell Group (MCG) and a Secondary Cell Group (SCG). The MCG is configured to be a group of serving cells including at least a Primary Cell (PCell). The SCG is configured to be a group of serving cells including at least a Primary Secondary Cell (PSCell). The PCell may also be a serving cell provided based on an initial connection. The PCell may also be a serving cell in which the initial connection is implemented. The MCG may also be configured to include one or more Secondary Cells (SCells). The SCG may also be configured to include one or more SCells. The PCell is also referred to as a primary cell. The PSCell is also referred to as a primary secondary cell. The SCell is also referred to as a secondary cell.

The MCG may also consist of serving cells on an EUTRA. The SCG may also consist of serving cells of a next-generation standard (New Radio (NR)).

Hereinafter, a frame structure will be described.

In the radio communication system according to an aspect of the present invention, at least Orthogonal Frequency Division Multiplex (OFDM) is used. An OFDM symbol is a unit of a time domain for the OFDM. The OFDM symbol includes at least one or more subcarriers. The OFDM symbol is converted into a time-continuous signal during generation of a baseband signal. In downlink, at least Cyclic Prefix-Orthogonal Frequency Division Multiplex (CP-OFDM) is used. In uplink, either the CP-OFDM or Discrete Fourier Transform-spread-Orthogonal Frequency Division Multiplex (DFTS-s-OFDM) is used. The DFT-s-OFDM may also be provided by applying transform precoding to the CP-OFDM.

The OFDM symbol may also be a term including a CP added to the OFDM symbol. That is, a specific OFDM symbol may also be configured to include the specific OFDM symbol and a CP added to the specific OFDM symbol.

SubCarrier Spacing (SCS) may also be provided by subcarrier spacing Δf = 2 µ • 15 kHz. For example, a subcarrier spacing configuration µ may be set to be any one of 0, 1, 2, 3, 4, and/or 5. For a specific BandWidth Part (BWP), the subcarrier spacing configuration µ may also be provided by a higher layer parameter.

In the radio communication system according to an aspect of the present invention, a time unit T_{c} may also be used in order to indicate a length in the time domain. The time unit T_{c} may also be given as T_{c} = 1 / (Δfₘₐₓ • N_{f}). Δfₘₐₓ may also be the maximum value of the subcarrier spacing supported by the radio communication system according to an aspect of the present invention. Δfₘₐₓ may also be Δfₘₐₓ = 480 kHz. N_{f} may also be N_{f} = 4096. A constant κ is κ = Δfₘₐₓ • N_{f} / (Δf_{ref}N_{f},_{ref}) = 64. Δf_{ref} may also be 15 kHz. N_{f},_{ref} may also be 2048.

The constant κ may also be a value indicating a relationship between a reference subcarrier spacing and T_{c}. The constant κ may also be used for a length of a subframe. The number of slots included in the subframe may also be provided based on at least the constant κ. Δf_{ref} is the reference subcarrier spacing, and N_{f,ref} is a value corresponding to the reference subcarrier spacing.

Transmission of a signal in the downlink and/or transmission of a signal in the uplink may also be organized into a frame of 10 ms. A frame is configured to include 10 subframes. The subframe has a length of 1 ms. A length of the frame may also be provided regardless of the subcarrier spacing Δf. That is, the length of the frame may also be provided regardless of µ. The length of the subframe may also be provided regardless of the subcarrier spacing Δf. That is, the length of the subframe may also be provided regardless of µ.

For a specific subcarrier spacing configuration µ, the number of and indexes of slots included in a subframe may also be provided. For example, a slot number n^{µ}ₛ may be provided in a subframe in an ascending order of integer values ranging from 0 to N^{subframe, µ}ₛₗₒₜ - 1. For the subcarrier spacing configuration µ, the number of and indexes of slots included in a frame may also be provided. Moreover, a slot number n^{µ}ₛ, _{f} may be provided in a frame in an ascending order of integer values ranging from 0 to N^{frame, µ}ₛₗₒₜ - 1. N^{slot}_{symb} consecutive OFDM symbols may also be included in one slot. N^{slot}_{symb} may be provided based on at least part of or the entirety of a Cyclic Prefix (CP) configuration. The CP configuration may also be provided based on at least the higher layer parameter. The CP configuration may also be provided based on at least dedicated RRC signaling. The slot number is also referred to as a slot index.

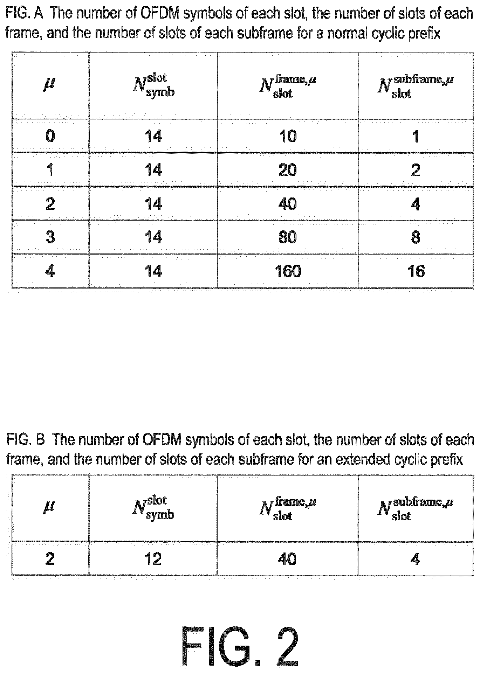

FIG. 2 is an example illustrating a relationship between N^{slot}_{symb}, a subcarrier spacing configuration µ, and a CP configuration according to an aspect of the present invention. In FIG. 2A, when the subcarrier spacing configuration µ is 2 and the CP configuration is a normal CP, N^{slot}_{symb} = 14, N^{frame, µ}ₛₗₒₜ= 40, and N^{subframe, µ}ₛₗₒₜ= 4. In addition, in FIG. 2B, when the subcarrier spacing configuration µ is 2 and the CP configuration is an extended CP, N^{slot}_{symb} = 12, N^{frame, µ}ₛₗₒₜ = 40, and N^{subframe, µ}slot= 4.

Physical resources will be described below.

An antenna port may also be defined in the following manner: a channel on which a symbol on one antenna port is transmitted can be estimated according to a channel on which another symbol on the same antenna port is transmitted. When a large scale property of the channel on which the symbol on one antenna port is transmitted can be estimated according to the channel on which the symbol on another antenna port is transmitted, the two antenna ports are referred to as Quasi-Co-Located (QCL). The large scale property may also include at least a long term property of a channel. The large scale property may also include at least part of or all of delay spread, Doppler spread, Doppler shift, average gain, average delay, and spatial receive/receiving (Rx) parameters. A first antenna port and a second antenna port being QCL related to a beam parameter may also refer to or mean that a reception beam with respect to a reception side for the first antenna port is the same as a reception beam with respect to a reception side for the second antenna port. A first antenna port and a second antenna port being QCL related to a beam parameter may also refer to or mean that a transmission beam with respect to the reception side for the first antenna port is the same as a transmission beam with respect to the reception side for the second antenna port. When a large scale property of a channel on which a symbol on one antenna port is transmitted can be estimated according to a channel on which a symbol on another antenna port is transmitted, the terminal apparatus 1 assumes that the two antenna ports are QCL. Two antenna ports being QCL may also refer to or mean the two antenna ports are assumed to be QCL.

For the subcarrier spacing configuration and a set of carriers, a resource grid defined by N^{size, µ}_{grid, x}N^{RB}_{sc} subcarriers and N^{subframe, µ}_{symb} OFDM symbols is provided. N^{size, µ}_{grid, x} may also indicate the number of resource blocks provided for the subcarrier spacing configuration µ used for a carrier x. N^{size, µ}_{grid, x} may also indicate a carrier bandwidth. N^{size, µ}_{grid, x} may also correspond to the value of a higher layer parameter CarrierBandwidth. The carrier x may also indicate either a downlink carrier or an uplink carrier. That is, x may also be either Downlink (DL) or Uplink (UL). N^{RB}_{sc} may also indicate the number of subcarriers included in one resource block. N^{RB}_{sc} may also be 12. At least one resource grid may also be provided for each antenna port p, and/or for each subcarrier spacing configuration µ, and/or for each transmission direction configuration. The transmission direction includes at least Downlink (DL) and Uplink (UL). Hereinafter, a set of parameters including at least part of or all of the antenna port p, the subcarrier spacing configuration µ, and the transmission direction configuration is also referred to as a first radio parameter set. That is, one resource grid may be provided for each first radio parameter set.

In the downlink, a carrier included in a serving cell is referred to as a downlink carrier (or a downlink component carrier). In the uplink, a carrier included in a serving cell is referred to as an uplink carrier (uplink component carrier). The downlink component carrier and the uplink component carrier are collectively referred to as a component carrier (or a carrier).

A type of the serving cell may also be any one of PCell, PSCell, and SCell. The PCell may also be a serving cell identified based on at least a cell ID acquired from an SS/PBCH in the initial connection. The PCell may also be provided with at least a Radio Resource Control (RRC) resource. The SCell may also be a serving cell used in carrier aggregation. The SCell may also be a serving cell provided based on at least the dedicated RRC signaling.

Each element in the resource grid provided for each first radio parameter set is referred to as a resource element. The resource element is determined based on at least an index k_{sc} of the frequency domain and an index 1_{sym} of the time domain. For a specific first radio parameter set, the resource element is determined based on at least the index k_{sc} of the frequency domain and the index 1_{sym} of the time domain. The resource element determined by the index k_{sc} of the frequency domain and the index 1_{sym} of the time domain is also referred to as a resource element (k_{sc}, 1_{sym}). The index k_{sc} of the frequency domain indicates any value from 0 to N^{µ}_{RB}N^{RB}_{sc} - 1. N^{µ}_{RB} may also be the number of resource blocks provided for the subcarrier spacing configuration µ. N^{µ}_{RB} may also be N^{size, µ}_{grid, x}. N^{RB}_{sc} may also be the number of subcarriers included in a resource block, and N^{RB}_{sc} = 12. The index k_{sc} of the frequency domain may also correspond to a subcarrier index k_{sc}. The index 1_{sym} of the time domain may also correspond to an OFDM index 1_{sym}.

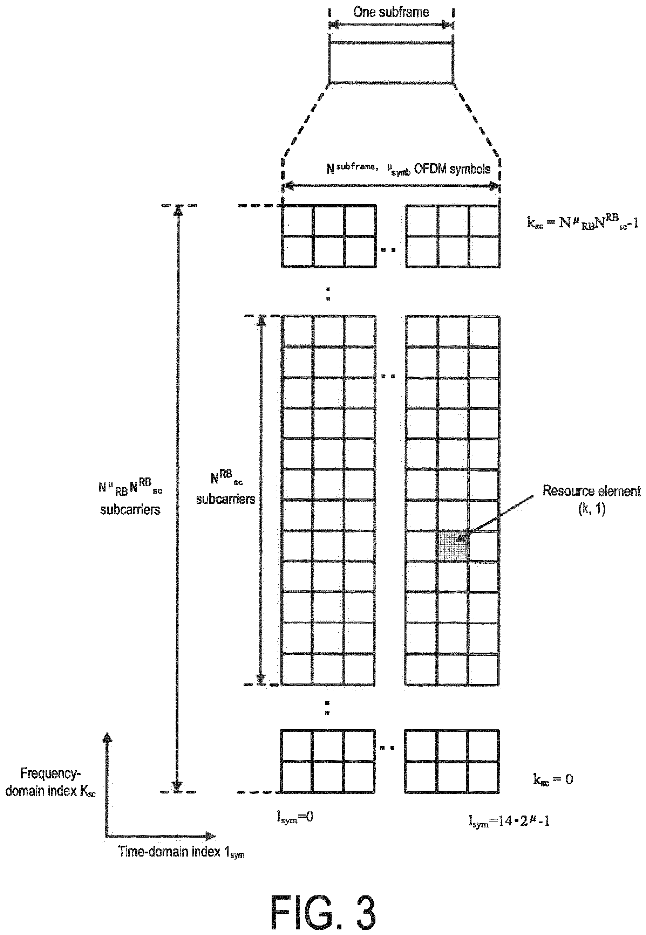

FIG. 3 is a schematic diagram illustrating an example of a resource grid in a subframe according to an aspect of the present invention. In the resource grid of FIG. 3, the horizontal axis is the index 1_{sym} of the time domain, and the vertical axis is the index k_{sc} of the frequency domain. In one subframe, the frequency domain of the resource grid includes N^{µ}_{RB}N^{RB}_{sc} subcarriers. In one subframe, the time domain of the resource grid may also include 14 • 2 µ OFDM symbols. A resource block is configured to include N^{RB}_{sc} subcarriers. The time domain of the resource block may also correspond to one OFDM symbol. The time domain of the resource block may also correspond to 14 OFDM symbols. The time domain of the resource block may also correspond to one or more slots. The time domain of the resource block may also correspond to one subframe.

The terminal apparatus 1 may also instruct that transmission and reception is performed by using only a subset of the resource grid. The subset of the resource grid is also referred to as a BWP, and the BWP may also be provided based on at least a higher layer parameter and/or part of or all Downlink Control Information (DCI). The BWP is also referred to as a carrier bandwidth part. The BWP is also referred to as a carrier bandwidth. The terminal apparatus 1 may also not instruct that transmission and reception are performed by using all sets of resource grids. The terminal apparatus 1 may also instruct that transmission and reception is performed by using part of frequency resources in the resource grid. One BWP may also consist of a plurality of resource blocks in the frequency domain. One BWP may also consist of a plurality of consecutive resource blocks in the frequency domain. A BWP configured for the downlink carrier is also referred to as a downlink BWP. A BWP configured for the uplink carrier is also referred to as an uplink BWP. The BWP may also be a subset of a carrier frequency band.

One or more downlink BWPs may also be configured for each serving cell. One or more uplink BWPs may also be configured for each serving cell.

One downlink BWP among the one or more downlink BWPs configured for the serving cell may also be configured (or may also be activated) as an active downlink BWP. A downlink BWP switch is used to deactivate one active downlink BWP and activate inactive downlink BWPs other than the one active downlink BWP. The downlink BWP switch may also be controlled by a BWP field included in downlink control information. The downlink BWP switch may also be controlled based on a higher layer parameter.

A Downlink-Shared Channel (DL-SCH) may also be received in the active downlink BWP. A Physical Downlink Control Channel (PDCCH) may also be monitored in the active downlink BWP. A Physical Downlink Shared Channel (PDSCH) may also be received in the active downlink BWP. Part of or all of the PDSCH, the PDCCH, and a Channel State Information-Reference Signal (CSI-RS) may not be received in BWPs other than the active downlink BWP.

The Downlink-Shared Channel (DL-SCH) may not be received in the inactive downlink BWP. The PDCCH may not be monitored in the inactive downlink BWP. CSI used for the inactive downlink BWP may not be reported.

Two or more downlink BWPs among the one or more downlink BWPs configured for the serving cell may not be configured to be the active downlink BWPs. At a specific time, one downlink BWP may also be active.

One uplink BWP among the one or more uplink BWPs configured for the serving cell may also be configured (or may also be activated) to be an active uplink BWP. An uplink BWP switch is used to deactivate one active uplink BWP and activate inactive uplink BWPs other than the one active uplink BWP. The uplink BWP switch may also be controlled by a BWP field included in the downlink control information. The uplink BWP switch may also be controlled based on a higher layer parameter.

A UL-SCH may also be transmitted in the active uplink BWP. A PUCCH may also be transmitted in the active uplink BWP. A Physical Random Access Channel (PRACH) may also be transmitted in the active uplink BWP. A Sounding Reference Signal (SRS) may also be transmitted in the active uplink BWP. Part of or all of the Physical Uplink Shared Channel (PUSCH) and the Physical Downlink Control Channel (PDCCH) may not be transmitted in BWPs other than the active uplink BWP.

The UL-SCH may not be transmitted in the inactive uplink BWP. The Physical Uplink Control Channel (PUCCH) may not be transmitted in the inactive uplink BWP. The PRACH may not be transmitted in the inactive uplink BWP. The SRS may not be transmitted in the inactive uplink BWP.

Two or more uplink BWPs among the one or more uplink BWPs configured for the serving cell may not be configured to be the active uplink BWPs. At a specific time, one uplink BWP may also be active.

The higher layer parameter is a parameter included in a higher layer signal. The higher layer signal may be Radio Resource Control (RRC) signaling, and may also be a Medium Access Control Control Element (MAC CE). Here, the higher layer signal may be an RRC-layer signal or a MAC-layer signal.

The higher layer signal may also be common RRC signaling. The common RRC signaling may also include at least part of or all of the following features C1 to C3.
Feature C1): being mapped to a Broadcast Control Channel (BCCH) logical channel or a Common Control Channel (CCCH) logical channel
Feature C2): including at least a ReconfigrationWithSync information element
Feature C3): being mapped to a Physical Broadcast Channel (PBCH) and/or system information.

The ReconfigrationWithSync information element may also include information indicating a configuration commonly used in the serving cell. The configuration commonly used in the serving cell may also include at least a PRACH configuration. The PRACH configuration may also indicate at least one or more random access preamble indexes. The PRACH configuration may also indicate at least a time/frequency resource of a PRACH.

The common RRC signaling may also include at least a common RRC parameter. The common RRC parameter may also be a cell-specific parameter commonly used in the serving cell.

The higher layer signal may also be dedicated RRC signaling. The dedicated RRC signaling may also include at least part of or all of the following features D1 and D2.
Feature D1): being mapped to a Dedicated Control Channel (DCCH) logical channel
Feature D2): not including a ReconfigrationWithSync information element.

For example, a Master Information Block (MIB) and a System Information Block (SIB) may be the common RRC signaling. In addition, a higher layer message mapped to the DCCH logical channel and including at least the ReconfigrationWithSync information element may also be the common RRC signaling. In addition, a higher layer message mapped to the DCCH logical channel but not including the ReconfigrationWithSync information element may be included in the dedicated RRC signaling.

The SIB may indicate at least a time index of a Synchronization Signal (SS) block. The SS block is also referred to as an SS/PBCH block. The SS block is also referred to as an initial signal block. The SIB may also include at least information associated with a PRACH resource. The SIB may also include at least information associated with a configuration of the initial connection.

The ReconfigrationWithSync information element may also include at least information associated with the PRACH resource (or a RACH resource). The ReconfigrationWithSync information element may also include at least information associated with a configuration of random access.

The dedicated RRC signaling may also include at least a dedicated RRC parameter. The dedicated RRC parameter may be a UE-specific parameter dedicated to the terminal apparatus 1.

The common RRC parameter and the dedicated RRC parameter are also referred to as higher layer parameters.

A physical channel and a physical signal according to various aspects of the present invention will be described below.

One physical channel may also be mapped to one serving cell. One physical channel may also be mapped to one carrier bandwidth part configured in a carrier included in a serving cell.

An uplink physical channel may also correspond to a set of resource elements delivering information generated in a higher layer. The uplink physical channel may also be a physical channel used in the uplink carrier. In the radio communication system according to an aspect of the present invention, at least part of or all of the uplink physical channels described below may also be used.
- Physical Uplink Control Channel (PUCCH)
- Physical Uplink Shared Channel (PUSCH)
- Physical Random Access Channel (PRACH)

The PUCCH may also be used to transmit Uplink Control Information (UCI). The uplink control information includes part of or all of Channel State Information (CSI), a Scheduling Request (SR), and Hybrid Automatic Repeat request ACKnowledgement (HARQ-ACK) information.

The uplink control information may be multiplexed on the PUCCH. The multiplexed PUCCH may also be transmitted.

The uplink control information may also be mapped to the PUCCH.

The HARQ-ACK information may also include at least an HARQ-ACK bit corresponding to a Transport block (TB) (Medium Access Control Protocol Data Unit (MAC PDU), Downlink-Shared Channel (DL-SCH), Physical Downlink Shared Channel (PDSCH)). The HARQ-ACK bit may also indicate an acknowledgement (ACK) or a negative-acknowledgement (NACK) corresponding to the transport block. The ACK may also be a value indicating that decoding of the transport block has been successfully completed. The NACK may be a value indicating that decoding of the transport block has not been successfully completed. The HARQ-ACK information may also correspond to an HARQ-ACK codebook including one or more HARQ-ACK bits. The HARQ-ACK bit corresponding to one or more transport blocks may refer to that the HARQ-ACK bit corresponds to a PDSCH including the one or more transport blocks.

The HARQ-ACK bit may also indicate an ACK or an NACK corresponding to one Code Block Group (CBG) included in the transport block. The HARQ-ACK information is also referred to as HARQ-ACK, an HARQ feedback, HARQ information, HARQ control information, and an HARQ-ACK message.

The Scheduling Request (SR) may also be used to at least request a PUSCH (or UL-SCH) resource used for a new transmission. A scheduling request bit may also be used to indicate either a positive SR or a negative SR. The scheduling request bit indicating the positive SR is also referred to as "positive SR is transmitted". The positive SR may indicate that the PUSCH resource used for the new transmission is requested by the terminal apparatus 1. The positive SR may also indicate that a scheduling request is triggered by a higher layer. The positive SR may also be transmitted when the higher layer instructs that a scheduling request needs to be transmitted. The scheduling request bit indicating the negative SR is also referred to as "negative SR is transmitted." The negative SR may indicate that the PUSCH resource used for the new transmission is not requested by the terminal apparatus 1. The negative SR may also indicate that a scheduling request is not triggered by the higher layer. The negative SR may not be transmitted when the higher layer does not instruct that a scheduling request needs to be transmitted.

The scheduling request bit may also be used to indicate either a positive SR or a negative SR for any one of one or more SR configurations. Each of the one or more SR configurations may correspond to one or more logical channels. A positive SR for a specific SR configuration may be a positive SR for any one of or all of one or more logical channels corresponding to the specific SR configuration. The negative SR may not correspond to a specific SR configuration. The indicated negative SR may also refer to or mean that the negative SR is indicated for all the SR configurations.

The SR configuration may also be a scheduling request ID. The scheduling request ID may also be provided by a higher-layer parameter.

The channel state information may also include at least part of or all of a Channel Quality Indicator (CQI), a Precoder Matrix Indicator (PMI), and a Rank Indicator (RI). The CQI is an indicator associated with channel quality (for example, propagation strength), and the PMI is an indicator associated with a precoder. The RI is an indicator associated with a transmission rank (or the number of transmission layers).

The channel state information may also be provided based on at least receiving a physical signal (for example, a CSI-RS) used for at least channel measurement. The channel state information may also include a value selected by the terminal apparatus 1. The channel state information may also be selected by the terminal apparatus 1 based on at least receiving the physical signal used for at least the channel measurement. The channel measurement may also include interference measurement.

A channel state information report is a report of the channel state information. The channel state information report may also include a CSI part 1 and/or a CSI part 2. The CSI part 1 may also be configured to include at least part of or all of wideband Channel Quality Information (CQI), a wideband Precoder Matrix Indicator (PMI), and a rank indicator. The number of bits of the CSI part 1 multiplexed on the PUCCH may also be a specific value regardless of the value of the rank indicator of the channel state information report. The number of bits of the CSI part 2 multiplexed on the PUCCH may also be provided based on the value of the rank indicator of the channel state information report. The rank indicator of the channel state information report may also be the value of a rank indicator used to calculate the channel state information report. The rank indicator of the channel state information report may also be a value indicated by a rank indicator field included in the channel state information report.

A set of rank indicators permitted in the channel state information report may be part of or all of 1 to 8. The set of rank indicators permitted in the channel state information report may also be provided based on at least a higher layer parameter RankRestriction. When the set of rank indicators permitted in the channel state information report includes only one value, the rank indicator of the channel state information report may also be the one value.

A priority may also be configured for the channel state information report. The priority of the channel state information report may also be provided based on at least part of or all of a configuration related to a time domain behavior of the channel state information report, a type of content of the channel state information report, an index of the channel state information report, and/or an index of a serving cell configured with measurement of the channel state information report.

The configuration related to the time domain behavior of the channel state information report may also be a configuration indicating whether the channel state information report is performed aperiodically, semi-persistently, or semi-statically.

The type of content of the channel state information report may also indicate whether the channel state information report includes a Reference Signals Received Power (RSRP) of layer 1.

The index of the channel state information report may also be provided by a higher layer parameter.

The PUCCH supports PUCCH formats (PUCCH format 0 to PUCCH format 4). The PUCCH format may be transmitted on the PUCCH. Transmitting the PUCCH format may also refer to transmitting the PUCCH.

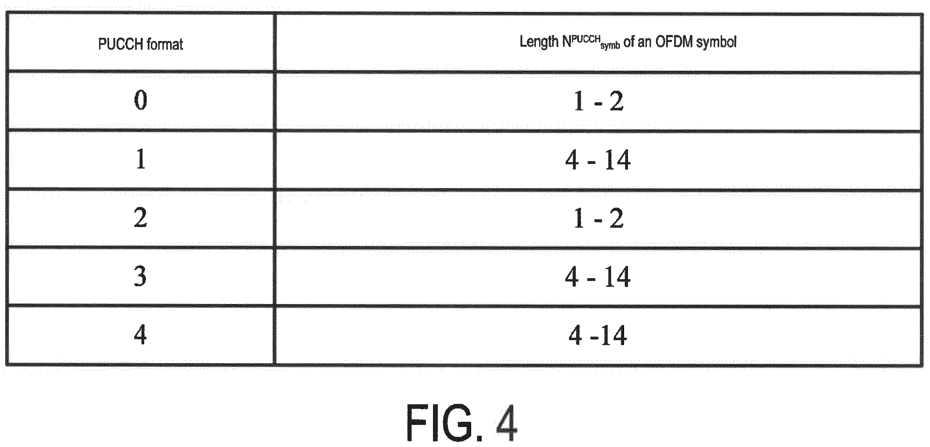

FIG. 4 is a diagram illustrating an example of a relationship between the PUCCH format and a length N^{PUCCH}_{symb} of the PUCCH format according to an aspect of the present invention. The length N^{PUCCH}_{symb} of PUCCH format 0 is 1 or 2 OFDM symbols. The length N^{PUCCH}_{symb} of PUCCH format 1 is any one of 4 to 14 OFDM symbols. The length N^{PUCCH}_{symb} of PUCCH format 2 is 1 or 2 OFDM symbols. The length N^{PUCCH}_{symb} of PUCCH format 3 is any one of 4 to 14 OFDM symbols. The length N^{PUCCH}_{symb} of PUCCH format 4 is any one of 4 to 14 OFDM symbols.

The PUSCH is used to transmit at least the transport block. The PUSCH may also be used to transmit at least part of or all of the transport block, the HARQ-ACK information, the channel state information, and the scheduling request. The PUSCH is used to transmit at least a random access message 3.

The UL-SCH may also be mapped to the PUSCH. The uplink control information may also be mapped to the PUSCH.

The PRACH may also be used to transmit at least a random access preamble (message 1). The PRACH may also be used to indicate at least part of or all of an initial connection establishment procedure, a handover procedure, a connection re-establishment procedure, synchronization (timing adjustment) for PUSCH transmission, and a request for a resource used for the PUSCH (or the UL-SCH). The random access preamble may also be used to notify the base station apparatus 3 of an index (random access preamble index) provided by a higher layer of the terminal apparatus 1.

The random access preamble may also be provided by cyclic-shifting a Zadoff-Chu sequence corresponding to a physical root sequence index u. The Zadoff-Chu sequence may also be generated based on the physical root sequence index u. In one serving cell, a plurality of random access preambles may be defined. The random access preamble may also be determined based on at least an index of the random access preamble. A different random access preamble corresponding to a different index of the random access preamble may also correspond to a different combination of the physical root sequence index u and the cyclic shift. The physical root sequence index u and the cyclic shift may also be provided based on at least information included in system information. The physical root sequence index u may also be an index for identifying a sequence included in the random access preamble. The random access preamble may also be determined based on at least the physical root sequence index u.

The uplink physical signal may also correspond to a set of resource elements. The uplink physical signal may not deliver information generated in a higher layer. The uplink physical signal may also be a physical signal used in the uplink carrier. In the radio communication system according to an aspect of the present invention, at least part of or all the uplink physical signals described below may also be used.
UpLink Demodulation Reference Signal (UL DMRS)
Sounding Reference Signal (SRS)
UpLink Phase Tracking Reference Signal (UL PTRS)

The UL DMRS is related to transmission of a PUSCH and/or a PUCCH. The UL DMRS is multiplexed on the PUSCH or the PUCCH. The base station apparatus 3 may use the UL DMRS in order to correct a propagation path of the PUSCH or the PUCCH. Transmission of both a PUSCH and a UL DMRS associated with the PUSCH will be hereinafter referred to simply as transmission of a PUSCH. Transmission of both a PUCCH and a UL DMRS associated with the PUCCH will be hereinafter referred to simply as transmission of a PUCCH. The UL DMRS associated with the PUSCH is also referred to as a UL DMRS used for the PUSCH. The UL DMRS associated with the PUCCH is also referred to as a UL DMRS used for the PUCCH.

The UL DMRS being associated with the PUSCH may also refer to the UL DMRS and the PUSCH that are transmitted on the same antenna port. The UL DMRS being associated with the PUSCH may also refer to a precoder of the UL DMRS which is the same as the precoder of the PUSCH.

The SRS may also be transmitted at the end of a subframe in an uplink slot or a specific number of OFDM symbols from the end.

The UL PTRS may be a reference signal used for at least phase tracking.

The downlink physical channel may also correspond to a set of resource elements delivering information generated in a higher layer. The downlink physical channel may also be a physical channel used in the downlink carrier. In the radio communication system according to an aspect of the present invention, at least part of or all the downlink physical channels described below may also be used.
Physical Broadcast Channel (PBCH)
Physical Downlink Control Channel (PDCCH)
Physical Downlink Shared Channel (PDSCH)

The PBCH is used to transmit at least the MIB and/or a PBCH payload. The PBCH payload may also include at least information indicating an index related to a transmission timing of the SS block. The PBCH payload may also include information associated with an identifier (index) of the SS block. The PBCH may also be transmitted at a specific transmission interval. The PBCH may also be transmitted at an interval of 80 ms. The PBCH may also be transmitted at an interval of 160 ms. Content of information included in the PBCH may be updated every 80 ms. Part of or all of the information included in the PBCH may be updated every 160 ms. The PBCH may also consist of 288 subcarriers. The PBCH may also be configured to include 2, 3, or 4 OFDM symbols. The MIB may also include information associated with the identifier (index) of the SS block. The MIB may also include information indicating at least part of a number of a slot in which the PBCH is transmitted, a number of a subframe in which the PBCH is transmitted, and/or a number of a radio frame in which the PBCH is transmitted. The radio frame is configured to include 10 subframes.

A BCH may also be mapped to the PBCH.

The PDCCH is used to transmit at least the Downlink Control Information (DCI). The PDCCH may include at least the downlink control information. The downlink control information is also referred to as a DCI format. The downlink control information may also indicate at least either a downlink assignment or an uplink grant. The DCI format used for scheduling of the PDSCH is also referred to as a downlink DCI format. The DCI format used for scheduling of the PUSCH is also referred to as an uplink DCI format. The uplink DCI format includes at least one or both of DCI format 0_0 and DCI format 0_1. The terminal apparatus 1 may also monitor a set of candidates for the PDCCH in one or more COntrol REsource SETs (CORESETs).

The downlink control information may also be mapped to the PDCCH.

DCI format 0_0 is configured to include at least part of or all of 1A to 1E.
1A) a DCI format-specific field (identifier for DCI formats field)
1B) a Frequency domain resource assignment field
1C) an Uplink time domain resource assignment field
1D) a Frequency hopping flag field
1E) a Modulation and Coding Scheme field (MCS field)

The DCI format-specific field may be used to at least indicate whether a DCI format including the DCI format-specific field corresponds to the uplink DCI format or the downlink DCI format. The DCI format-specific field included in DCI format 0_0 may also indicate 0 (or may indicate the uplink DCI format).

The frequency domain resource assignment field may also be used to at least indicate assignment of frequency resources used for the PUSCH (or the PDSCH).

The uplink time domain resource assignment field may also be used to at least indicate assignment of time resources used for the PUSCH (or the PDSCH).

The frequency hopping flag field may also be used to at least indicate whether to apply frequency hopping to the PUSCH.

The MCS field may be used to at least indicate part of or all of a modulation scheme and/or a target coding rate used for the PUSCH (or the PDSCH). The target coding rate may also be a target coding rate used for the transport block of the PUSCH (or the PDSCH). A Transport Block Size (TBS) may also be provided based on at least the target coding rate.

DCI format 0_0 may not include a field used for a request for CSI (CSI request).

DCI format 0_1 is configured to include at least part of or all of 2A to 2H.
2A) a DCI format-specific field
2B) a Frequency domain resource assignment field
2C) an Uplink time domain resource assignment field
2D) a Frequency hopping flag field
2E) an MCS field
2F) a CSI request field (second CSI request field)
2G) a BWP field
2H) an Uplink Downlink Assignment Indicator field (UL DAI field)

The DCI format-specific field included in DCI format 0_1 may also indicate 0.

The BWP field may be used to indicate an uplink BWP to which the PUSCH is mapped. The BWP field may be used to indicate a downlink BWP to which the PDSCH is mapped.

The CSI request field is used to at least indicate a CSI report. A size of the second CSI request field may also be provided based on at least a higher layer parameter ReportTriggerSize.

The UL Downlink Assignment Indicator (DAI) field may be used for at least generation of a codebook of the HARQ-ACK information. V^{UL}_{DAI} may also be provided based on at least the value of the UL DAI field. V^{UL}_{DAI} is also referred to as a UL DAI.

The downlink DCI format includes at least one or both of DCI format 1_0 and DCI format 1_1.

DCI format 1_0 is configured to include at least part of or all of 3A to 31.
3A) a DCI format-specific field (identifier for DCI formats field)
3B) a Frequency domain resource assignment field
3C) a Downlink time domain resource assignment field
3D) a Frequency hopping flag field
3E) a Modulation and Coding Scheme field (MCS field)
3F) a First CSI request field
3G) a PDSCH to HARQ feedback timing indicator field
3H) a PUCCH resource indicator field
31) a Counter Downlink Assignment Indicator (DAI) field

The DCI format-specific field included in DCI format 1_0 may also indicate 1 (or may indicate the downlink DCI format).

The downlink time domain resource assignment field may be used to at least indicate part of or all of a timing K0, a mapping type of the DMRS, and an OFDM symbol to which the PDSCH is mapped. When an index of a slot including the PDCCH is slot n, an index of a slot including the PUSCH may be n + K0.

The PDSCH to HARQ feedback timing indicator field may be a field indicating a timing Kl. When an index of a slot including the last OFDM symbol of the PDSCH is slot n, an index of a slot including the PUCCH or the PUSCH may be n + K1, wherein the PUCCH or the PUSCH includes at least an HARQ-ACK corresponding to the transport block included in the PDSCH. When the index of the slot including the last OFDM symbol of the PDSCH is slot n, an index of a slot including a beginning OFDM symbol of the PUCCH or a beginning OFDM symbol of the PUSCH may be n + K1, wherein the beginning OFDM symbol of the PUCCH or the beginning OFDM symbol of the PUSCH includes at least an HARQ-ACK corresponding to the transport block included in the PDSCH.

The PUCCH resource indicator field may be a field indicating an index of any one of one or more PUCCH resources included in a PUCCH resource set.

The counter DAI field may be used for at least generation of a codebook of the HARQ-ACK information. V^{DL}_{C-DAI, c,m} may also be provided based on at least the value of the counter DAI field. V^{DL}_{C-DAI, c,m} is also referred to as a counter DAI.

DCI format 1_1 is configured to include at least part of or all of 4A to 41.
4A) a DCI format-specific field (identifier for DCI formats field)
4B) a Frequency domain resource assignment field
4C) a Downlink time domain resource assignment field
4D) a Frequency hopping flag field
4E) a Modulation and Coding Scheme field (MCS field)
4F) a PDSCH to HARQ feedback timing indicator field
4G) a PUCCH resource indicator field
4H) a BWP field
41) a Downlink Assignment Indicator field (DAI field)

The DCI format-specific field included in DCI format 1_1 may also indicate 1 (or may indicate the downlink DCI format).

The DAI field may be used for at least generation of a codebook of the HARQ-ACK information. V^{DL}_{T-DAI, m} may also be provided based on at least the value of the DAI field. V^{DL}_{C-DAI, c, m} may also be provided based on at least the value of the DAI field. V^{DL}_{T-DAI, m} is also referred to as a global DAI.

DCI format 2_0 may be used to at least indicate a slot format. The slot format may be information indicating a transmission direction (downlink, uplink, or XXX) for each of OFDM symbols forming a specific slot. XXX may not indicate the transmission direction.

The control resource set may indicate a time domain and/or a frequency domain to which one or more PDCCH candidates are mapped. The control resource set may also be a domain in which the terminal apparatus 1 monitors the PDCCH. The control resource set may also consist of consecutive resources (localized resources). The control resource set may also consist of nonconsecutive resources (distributed resources).

For each control resource set, part of or all of an index of the control resource set, the number of OFDM symbols of the control resource set, and a set of resource blocks of the control resource set may also be provided.

The index of the control resource set may be used for at least identification of the control resource set.

The number of OFDM symbols in the control resource set may indicate the number of OFDM symbols to which the control resource set is mapped.

The set of resource blocks of the control resource set may indicate a set of resource blocks to which the control resource set is mapped. The set of resource blocks of the control resource set may also be provided by a bitmap included in the higher-layer parameters. Bits included in the bitmap may correspond to six consecutive resource blocks.

The set of candidates for the PDCCH monitored by the terminal apparatus 1 may be defined from the perspective of a search space set. The set of PDCCH candidates monitored by the terminal apparatus 1 may be provided according to the search space set.

The search space may be configured to include one or more PDCCH candidates at a specific aggregation level. The aggregation level of the PDCCH candidate may indicate the number of Control Channel Elements (CCEs) forming the PDCCH.

The search space set may be configured to include at least one or more search spaces. The search space set may be configured to include one or more PDCCH candidates corresponding to each of one or more aggregation levels. A type of the search space set may also be any one of a type 0 PDCCH common search space set, a type 0a PDCCH common search space set, a type 1 PDCCH common search space set, a type 2 PDCCH common search space set, a type 3 PDCCH common search space set, and/or a UE-specific PDCCH search space set.

The type 0 PDCCH common search space set, the type 0a PDCCH common search space set, the type 1 PDCCH common search space set, the type 2 PDCCH common search space set, and the type 3 PDCCH common search space set are also referred to as a Common Search Space (CSS) set. The UE-specific PDCCH search space set is also referred to as a UE-specific Search Space (USS) set.

The search space set may be separately associated with the control resource set. The search space set may also be separately included in at least the control resource set. An index of the control resource set associated with the search space set may also be provided for the search space set.

Monitoring periodicity of the search space set may also be configured for the search space set. The monitoring periodicity of the search space set may also indicate at least an interval between slots in which the search space set is monitored by the terminal apparatus 1. A higher layer parameter indicating at least the monitoring periodicity of the search space set may also be provided for the search space set.

A monitoring offset of the search space set may also be configured for each of the search space set. The monitoring offset of the search space set may indicate at least an offset of the index of the slot in which the search space set is monitored by the terminal apparatus 1 from a reference index (for example, slot #0). A higher layer parameter indicating at least the monitoring offset of the search space set may also be provided for each search space set.

A monitoring pattern of the search space set may also be configured for the search space set. The monitoring pattern of the search space set may indicate a beginning OFDM symbol of the search space set used for monitoring. The monitoring pattern of the search space set may also be provided by a bitmap indicating the beginning OFDM symbol in one or more slots. A higher layer parameter indicating at least the monitoring pattern of the search space set may also be provided for each search space set.

A monitoring occasion for the search space set may be provided based on at least part of or all of the monitoring periodicity of the search space set, the monitoring offset of the search space set, the monitoring pattern of the search space set, and/or the DRX configuration.

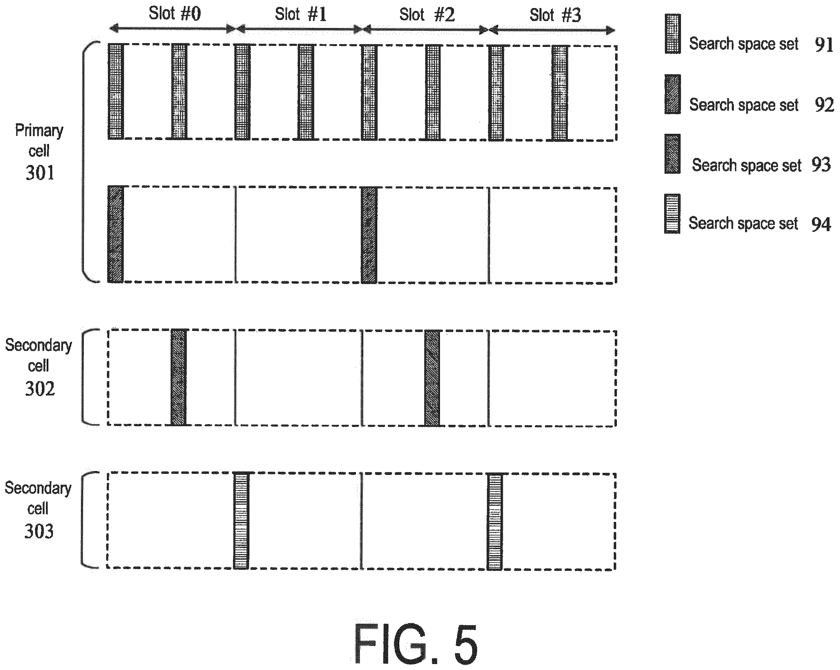

FIG. 5 is a diagram illustrating an example of a monitoring occasion for a search space set according to an aspect of the present invention. In FIG. 5, a search space set 91 and a search space set 92 are configured to be in a primary cell 301, a search space set 93 is configured to be in a secondary cell 302, and a search space set 94 is configured to be in a secondary cell 303.

In FIG. 5, blocks with grid lines indicate the search space set 91, blocks with upward-sloping lines indicate the search space set 92, blocks with downward-sloping lines indicate the search space set 93, and blocks with horizontal lines indicate the search space set 94.

The monitoring periodicity of the search space set 91 is set to be 1 slot, the monitoring offset of the search space set 91 is set to be 0 slot, and the monitoring pattern of the search space set 91 is set to be [1,0,0,0,0,0,0,1,0,0,0,0,0,0]. That is, the monitoring occasion for the search space set 91 is the beginning OFDM symbol (OFDM symbol #0) and the eighth OFDM symbol (OFDM symbol #7) in each slot.

The monitoring periodicity of the search space set 92 is set to be 2 slots, the monitoring offset of the search space set 92 is set to be 0 slot, and the monitoring pattern of the search space set 92 is set to be [1,0,0,0,0,0,0,0,0,0,0,0,0,0]. That is, the monitoring occasion for the search space set 92 is the beginning OFDM symbol (OFDM symbol #0) in each even-numbered slot.

The monitoring periodicity of the search space set 93 is set to be 2 slots, the monitoring offset of the search space set 93 is set to be 0 slot, and the monitoring pattern of the search space set 93 is set to be [0,0,0,0,0,0,0,1,0,0,0,0,0,0]. That is, the monitoring occasion for the search space set 93 is the eighth OFDM symbol (OFDM symbol #7) in each even-numbered slot.

The monitoring periodicity of the search space set 94 is set to be 2 slots, the monitoring offset of the search space set 94 is set to be 1 slot, and the monitoring pattern of the search space set 94 is set to be [1,0,0,0,0,0,0,0,0,0,0,0,0,0]. That is, the monitoring occasion for the search space set 94 is the beginning OFDM symbol (OFDM symbol #0) in each odd-numbered slot.

The type 0 PDCCH common.search space set may be used for at least a DCI format having a Cyclic Redundancy Check (CRC) sequence scrambled with a System Information-Radio Network Temporary Identifier (SI-RNTI). A configuration of the Type 0 PDCCH common search space set may be provided based on at least four Least Significant Bits (LSBs) of a higher layer parameter PDCCH-ConfigSIB1. The higher layer parameter PDCCH-ConfigSIB1 may also be included in the MIB. The configuration of the type 0 PDCCH common search space set may also be provided based on at least a higher layer parameter SearchSpaceZero. Interpretation of bits in the higher layer parameter SearchSpaceZero may also be the same as interpretation of the four LSBs in the higher layer parameter PDCCH-ConfigSIB 1. The configuration of the type 0 PDCCH common search space set may also be provided based on at least a higher layer parameter SearchSpaceSIB1. The higher layer parameter SearchSpaceSIB1 may also be included in a higher layer parameter PDCCH-ConfigCommon. A PDCCH detected in the type 0 PDCCH common search space set may also be used for at least scheduling of the PDSCH to be transmitted and including an SIB1. The SIB1 is a type of the SIB. The SIB1 may also include scheduling information for SIBs other than the SIB1. The terminal apparatus 1 may also receive the higher layer parameter PDCCH-ConfigCommon in the EUTRA. The terminal apparatus 1 may also receive the higher layer parameter PDCCH-ConfigCommon in the MCG.

The type 0a PDCCH common search space set may be used for at least a DCI format having a Cyclic Redundancy Check (CRC) sequence scrambled with a System Information-Radio Network Temporary Identifier (SI-RNTI). A configuration of the type 0a PDCCH common search space set may also be provided based on at least a higher layer parameter SearchSpaceOtherSystemInformation. The higher layer parameter SearchSpaceOtherSystemlnformation may be included in the SIB1. The higher layer parameter SearchSpaceOtherSystemInformation may also be included in the higher layer parameter PDCCH-ConfigCommon. A PDCCH detected in the type 0 PDCCH common search space set may also be used for at least scheduling of a PDSCH to be transmitted and including SIBs other than the SIB1.

The type 1 PDCCH common search space set may be used for at least a DCI format having a CRC sequence scrambled with a Random Access-Radio Network Temporary Identifier (RA-RNTI) and/or a CRC sequence scrambled with a Temporary Common-Radio Network Temporary Identifier (TC-RNTI). The RA-RNTI may be provided based on at least a time/frequency resource of the random access preamble transmitted by the terminal apparatus 1. The TC-RNTI may be provided by a PDSCH scheduled in the DCI format having the CRC sequence scrambled with the RA-RNTI (also referred to as a message 2 or a random access response). The type 1 PDCCH common search space set may also be provided based on at least a higher layer parameter ra-SearchSpace. The higher layer parameter ra-SearchSpace may be included in the SIB1. The higher layer parameter ra-SearchSpace may also be included in the higher layer parameter PDCCH-ConfigCommon.

The type 2 PDCCH common search space set may be used for at least a DCI format having a CRC sequence scrambled with a Paging-Radio Network Temporary Identifier (P-RNTI). The P-RNTI may be used to transmit at least the DCI format including information notifying an SIB change. The type 2 PDCCH common search space set may also be provided based on at least a higher layer parameter PagingSearchSpace. The higher layer parameter PagingSearchSpace may be included in the SIB 1. The higher layer parameter PagingSearchSpace may also be included in the higher layer parameter PDCCH-ConfigCommon.

The type 3 PDCCH common search space set may be used for at least a DCI format having a CRC sequence scrambled with a Cell-Radio Network Temporary Identifier (C-RNTI). The C-RNTI may be provided by a PDSCH scheduled in the DCI format having the CRC sequence scrambled with the TC-RNTI (also referred to as a message 4 or a contention resolution). The type 3 PDCCH common search space set may also be a search space set provided when a higher layer parameter SearchSpaceType is configured to be in common.

The UE-specific PDCCH search space set may be used for at least the DCI format having the CRC sequence scrambled with the C-RNTI.

When the C-RNTI is provided to the terminal apparatus 1, the type 0 PDCCH common search space set, the type 0a PDCCH common search space set, the type 1 PDCCH common search space set, and/or the type 2 PDCCH common search space set may be used for at least the DCI format having the CRC sequence scrambled with the C-RNTI.

When the C-RNTI is provided to the terminal apparatus 1, the search space set provided based on at least any one of the higher layer parameter PDCCH-ConfigSIB1, the higher layer parameter SearchSpaceZero, the higher layer parameter SearchSpaceSIB1, the higher layer parameter SearchSpaceOtherSystemInformation, the higher layer parameter ra-SearchSpace, or the higher layer parameter PagingSearchSpace may be used for at least the DCI format having the CRC sequence scrambled with the C-RNTI.

The common control resource set may include at least one or both of the CSS and the USS. The dedicated control resource set may also include at least one or both of the CSS and the USS.

A physical resource of the search space set consists of a Control Channel Element (CCE) of the control channel, wherein the CCE is a unit of the control channel. The CCE consists of 6 Resource Element Groups (REGs). The REG may consist of one OFDM symbol in one Physical Resource Block (PRB). That is, the REG may be configured to include 12 Resource Elements (REs). The PRB is also simply referred to as a Resource Block (RB).

The PDSCH is used to transmit at least the transport block. The PDSCH is used to transmit at least a random access message 2 (random access response). The PDSCH may also be used to transmit at least system information including parameters used for an initial access.

The DL-SCH may also be mapped to the PDSCH.

The downlink physical signal may also correspond to a set of resource elements. The downlink physical signal may not deliver information generated in a higher layer. The downlink physical signal may also be a physical signal used in the downlink carrier. In the radio communication system according to an aspect of the present invention, at least part of or all the downlink physical signals described below may also be used.
Synchronization Signal (SS)
DownLink Demodulation Reference Signal (DL DMRS)
Channel State Information-Reference Signal (CSI-RS)
DownLink Phase Tracking Reference Signal (DL PTRS)
Tracking Reference Signal (TRS)

The synchronization signal is used for the terminal apparatus 1 to establish synchronization in the frequency domain and/or the time domain in the downlink. The synchronization signal includes a Primary Synchronization Signal (PSS) and a Secondary Synchronization Signal (SSS).

An SS block (SS/PBCH block) is configured to include at least part of or all of the PSS, the SSS, and the PBCH. Respective antenna ports of part of or all of the PSS, SSS, and PBCH included in the SS block may be the same. Part of or all of the PSS, SSS, and PBCH included in the SS block may be mapped to consecutive OFDM symbols. Respective CP configurations of part of or all of the PSS, SSS, and PBCH included in the SS block may be the same. Respective subcarrier spacing configurations µ of part of or all of the PSS, SSS, and PBCH included in the SS block may be the same.

The DL DMRS is associated with transmission of the PBCH, the PDCCH, and/or the PDSCH. The DL DMRS is multiplexed on the PBCH, the PDCCH, and/or the PDSCH. The terminal apparatus 1 may also use the DL DMRS corresponding to the PBCH, the PDCCH, or the PDSCH in order to correct a propagation path of the PBCH, the PDCCH, or the PDSCH. Hereinafter, transmission of both of the PBCH and the DL DMRS associated with the PBCH is referred to as transmission of the PBCH. Furthermore, transmission of both of the PDCCH and the DL DMRS associated with the PDCCH is simply referred to as transmission of the PDCCH. Furthermore, transmission of both of the PDSCH and the DL DMRS associated with the PDSCH is simply referred to as transmission of the PDSCH. The DL DMRS associated with the PBCH is also referred to as a DL DMRS used for the PBCH. The DL DMRS associated with the PDSCH is also referred to as a DL DMRS used for the PDSCH. The DL DMRS associated with the PDCCH is also referred to as a DL DMRS associated with the PDCCH.

The DL DMRS may be a reference signal individually configured for the terminal apparatus 1. A sequence of the DL DMRS may be provided based on at least a parameter individually configured for the terminal apparatus 1. The sequence of the DL DMRS may also be provided based on at least a UE-specific value (for example, the C-RNTI, etc.). The DL DMRS may be individually transmitted for the PDCCH and/or the PDSCH.

The CSI-RS may be a signal used to at least calculate the channel state information. A pattern of the CSI-RS assumed by the terminal apparatus may be provided by at least a higher layer parameter.

The PTRS may be a signal used to at least compensate for phase noise. A pattern of the PTRS assumed by the terminal apparatus may be provided based on at least a higher layer parameter and/or DCI.

The DL PTRS may be associated with a DL DMRS group including at least an antenna port used for one or more DL DMRSs. The association of the DL PTRS with the DL DMRS group may also refer to that the antenna port for the DL PTRS and part of or all of the antenna ports included in the DL DMRS group are at least QCL. The DL DMRS group may be identified based on at least an antenna port having the lowest index among the antenna ports for the DL DMRS included in the DL DMRS group.

The TRS may be a signal used for at least time and/or frequency synchronization. A pattern of the TRS assumed by the terminal apparatus may be provided based on at least a higher layer parameter and/or DCI.

The downlink physical channel and the downlink physical signal are also collectively referred to as downlink signals. The uplink physical channel and the uplink physical signal are also collectively referred to as uplink signals. The downlink signal and the uplink signal are collectively referred to as physical signals. The downlink signal and the uplink signal are collectively referred to as signals. The downlink physical channel and the uplink physical channel are collectively referred to as physical channels. The downlink physical signal and the uplink physical signal are collectively referred to as physical signals.

Description is provided for the SS/PBCH block.

The SS/PBCH block is configured to include at least part of or all of the PSS, the SSS, and the PBCH. The SS/PBCH block may also consist of 4 consecutive OFDM symbols. In the time domain, the PSS may be mapped to a beginning OFDM symbol of the SS/PBCH block. In the time domain, the SSS may be mapped to the third OFDM symbol of the SS/PBCH block. In the time domain, the PBCH may be mapped to the second OFDM symbol, the third OFDM symbol, and the fourth OFDM symbol of the SS/PBCH block.

The SS/PBCH block may consist of 240 subcarriers. In the frequency domain, the PSS may be mapped to the 57^{th} subcarrier to the 183^{th} subcarrier. In the frequency domain, the SSS may also be mapped to the 57^{th} subcarrier to the 183^{th} subcarrier. Subcarriers from the first subcarrier of the first OFDM symbol to the 56^{th} subcarrier of the first OFDM symbol may be configured to be zero. Subcarriers from the 184^{th} subcarrier of the first OFDM symbol to the 240^{th} subcarrier of the first OFDM symbol may be configured to be zero. Subcarriers from the 49^{th} subcarrier of the third OFDM symbol to the 56^{th} subcarrier of the third OFDM symbol may be configured to be zero. Subcarriers from the 184^{th} subcarrier of the third OFDM symbol to the 192^{th} subcarrier of the third OFDM symbol may be configured to be zero. The PBCH may also be mapped to subcarriers from the first subcarrier to the 240^{th} subcarrier of the second OFDM symbol without being mapped to a subcarrier of the DMRS associated with the PBCH. The PBCH may also be mapped to subcarriers from the first subcarrier to the 48^{th} subcarrier of the third OFDM symbol without being mapped to the subcarrier of the DMRS associated with the PBCH. The PBCH may also be mapped to subcarriers from the 193^{th} subcarrier to the 240^{th} subcarrier of the third OFDM symbol without being mapped to the subcarrier of the DMRS associated with the PBCH. The PBCH may also be mapped to subcarriers from the first subcarrier to the 240^{th} subcarrier of the fourth OFDM symbol without being mapped to the subcarrier of the DMRS associated with the PBCH.

The Broadcast Channel (BCH), the Uplink-Shared Channel (UL-SCH), and the Downlink-Shared Channel (DL-SCH) are transport channels. A channel used in a Medium Access Control (MAC) layer is referred to as a transport channel. A unit of the transport channel used in the MAC layer is also referred to as a transport block (TB) or a MAC PDU. A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and encoding processing is performed on each codeword.

The base station apparatus 3 and the terminal apparatus 1 exchange (transmit and receive) a higher layer signal in a higher layer. For example, the base station apparatus 3 and the terminal apparatus 1 may also transmit and receive Radio Resource Control (RRC) signaling (RRC message or RRC information) in an RRC layer. Furthermore, the base station apparatus 3 and the terminal apparatus 1 may also transmit and receive a MAC Control Element (CE) in the MAC layer. Here, the RRC signaling and/or the MAC CE is also referred to as higher layer signaling.

The PUSCH and the PDSCH may also be used to transmit at least the RRC signaling and/or the MAC CE. Here, the RRC signaling transmitted from the base station apparatus 3 via the PDSCH may also be signaling common to a plurality of terminal apparatuses 1 in a cell. The signaling common to the plurality of terminal apparatuses 1 in the cell is also referred to as common RRC signaling. Furthermore, the RRC signaling transmitted from the base station apparatus 3 via the PDSCH may also be signaling dedicated to a specific terminal apparatus 1 (also referred to as dedicated signaling or UE-specific signaling). The signaling dedicated to the terminal apparatus 1 is also referred to as dedicated RRC signaling. A serving cell-specific higher layer parameter may also be transmitted to the plurality of terminal apparatuses 1 in the serving cell by using the common signaling, or may also be transmitted to a specific terminal apparatus 1 by using the dedicated signaling. A UE-specific higher layer parameter may also be transmitted to a specific terminal apparatus 1 by using the dedicated signaling.

A Broadcast Control Channel (BCCH), a Common Control Channel (CCCH), and a Dedicated Control Channel (DCCH) are logical channels. For example, the BCCH is a higher layer channel used to transmit the MIB. Furthermore, the Common Control Channel (CCCH) is a higher layer channel used to transmit information common to the plurality of terminal apparatuses 1. Here, the CCCH may be used for, for example, a terminal apparatus 1 having not established an RRC connection. Furthermore, the Dedicated Control Channel (DCCH) is a higher layer channel used to transmit at least dedicated control information to the terminal apparatus 1. Here, the DCCH may be used for, for example, a terminal apparatus 1 having established an RRC connection.

The BCCH in the logical channel may be mapped to the BCH, the DL-SCH, or the UL-SCH in the transport channel. The CCCH in the logical channel may be mapped to the DL-SCH or the UL-SCH in the transport channel. The DCCH in the logical channel may be mapped to the DL-SCH or the UL-SCH in the transport channel.

The UL-SCH in the transport channel may be mapped to the PUSCH in the physical channel. The DL-SCH in the transport channel may be mapped to the PDSCH in the physical channel. The BCH in the transport channel may be mapped to the PBCH in the physical channel.

A configuration example of the terminal apparatus 1 according to an aspect of the present invention will be described below.

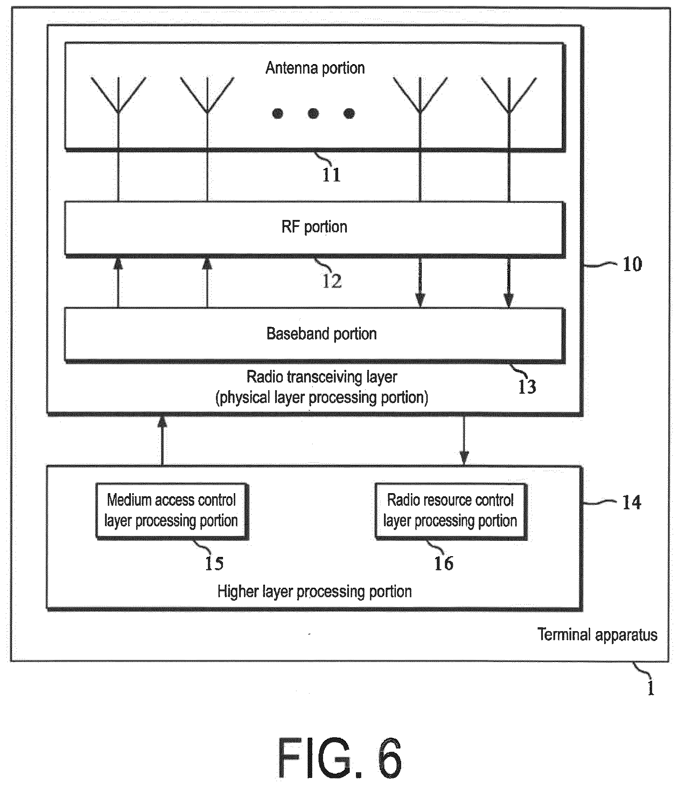

FIG. 6 is a schematic block diagram illustrating a configuration of the terminal apparatus 1 according to an aspect of the present invention. As illustrated in FIG. 6, the terminal apparatus 1 is configured to include a radio transceiving portion 10 and a higher layer processing portion 14. The radio transceiving portion 10 is configured to include at least part of or all of an antenna portion 11, a Radio Frequency (RF) portion 12, and a baseband portion 13. The higher layer processing portion 14 is configured to include at least part of or all of a medium access control layer processing portion 15 and a radio resource control layer processing portion 16. The radio transceiving portion 10 is also referred to as a transmitting portion, a receiving portion, or a physical layer processing portion.

The higher layer processing portion 14 outputs uplink data (transport block) generated by a user operation, etc., to the radio transceiving portion 10. The higher layer processing portion 14 performs processing of a MAC layer, a Packet Data Convergence Protocol (PDCP) layer, a Radio Link Control (RLC) layer, and an RRC layer.

The medium access control layer processing portion 15 included in the higher layer processing portion 14 performs processing of the MAC layer.

The radio resource control layer processing portion 16 included in the higher layer processing portion 14 performs processing of the RRC layer. The radio resource control layer processing portion 16 manages various configuration information/parameters of the terminal apparatus. The radio resource control layer processing portion 16 configures various configuration information/parameters based on a higher layer signal received from the base station apparatus 3. That is, the radio resource control layer processing portion 16 configures various configuration information/parameters based on information indicating the various configuration information/parameters received from the base station apparatus 3. The parameters may also be higher layer parameters.

The radio transceiving portion 10 performs processing of the physical layer, such as modulation, demodulation, encoding, decoding, etc. The radio transceiving portion 10 may also include a radio receiving portion and a radio transmitting portion (not illustrated in FIG. 6). The radio transceiving portion 10 (or the radio receiving portion) demultiplexes, demodulates, and decodes a received physical signal, and outputs the decoded information to the higher layer processing portion 14. The radio transceiving portion 10 (or the radio transmitting portion) generates a physical signal by performing modulation and encoding on data and generating a baseband signal (converted into a time-continuous signal), and transmits the physical signal to the base station apparatus 3. The radio transceiving portion 10 may also perform carrier sensing.

The RF portion 12 converts (down-converts), by orthogonal demodulation, a signal received via the antenna portion 11 into a baseband signal, and removes unwanted frequency components. The RF portion 12 outputs a processed analog signal to the baseband portion.

The baseband portion 13 converts the analog signal inputted from the RF portion 12 into a digital signal. The baseband portion 13 removes, from the converted digital signal, a portion corresponding to a Cyclic Prefix (CP), performs Fast Fourier Transform (FFT) on the signal from which the CP has been removed, and extracts a signal in the frequency domain.

The baseband portion 13 generates an OFDM symbol by performing Inverse Fast Fourier Transform (IFFT) on the data, adds a CP to the generated OFDM symbol, generates a baseband digital signal, and converts the baseband digital signal into an analog signal. The baseband portion 13 outputs the converted analog signal to the RF portion 12.

The RF portion 12 uses a low-pass filter to remove unnecessary frequency components from the analog signal inputted from the baseband portion 13, up-converts the analog signal into a signal having a carrier frequency, and transmits the up-converted signal by means of the antenna portion 11. Furthermore, the RF portion 12 amplifies power. Furthermore, the RF portion 12 may also have a function of controlling transmit power. The RF portion 12 is also referred to as a transmit power control portion.

A configuration example of the base station apparatus 3 according to an aspect of the present invention will be described below.

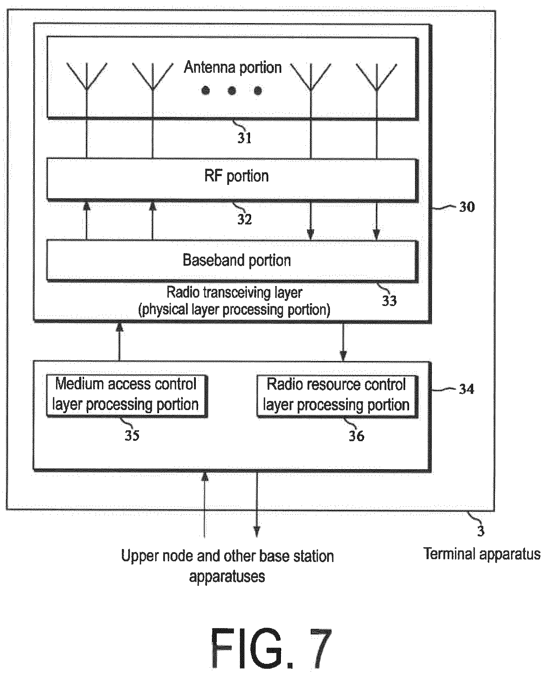

FIG. 7 is a schematic block diagram illustrating a configuration of the base station apparatus 3 according to an aspect of the present invention. As illustrated in FIG. 7, the base station apparatus 3 is configured to include a radio transceiving portion 30 and a higher layer processing portion 34. The radio transceiving portion 30 is configured to include an antenna portion 31, an RF portion 32, and a baseband portion 33. The higher layer processing portion 34 is configured to include a medium access control layer processing portion 35 and a radio resource control layer processing portion 36. The radio transceiving portion 30 is also referred to as a transmitting portion, a receiving portion, or a physical layer processing portion.

The higher layer processing portion 34 performs processing of a MAC layer, a PDCP layer, an RLC layer, and an RRC layer.

The medium access control layer processing portion 35 included in the higher layer processing portion 34 performs processing of the MAC layer.

The radio resource control layer processing portion 36 included in the higher layer processing portion 34 performs processing of the RRC layer. The radio resource control layer processing portion 36 generates, or acquires from an upper node, downlink data (transport block), system information, an RRC message, an MAC CE, etc., configured to be on a PDSCH, and outputs the same to the radio transceiving portion 30. Furthermore, the radio resource control layer processing portion 36 manages various configuration information/parameters for each terminal apparatus 1. The radio resource control layer processing portion 36 may also configure various configuration information/parameters for each terminal apparatus 1 by means of a higher layer signal. That is, the radio resource control layer processing portion 36 transmits/broadcasts information indicating various configuration information/parameters.

The function of the radio transceiving portion 30 is the same as the function of the radio transceiving portion 10 in FIG. 6, and therefore description thereof is omitted.

Each portion having reference numeral 10 to reference numeral 16 included in the terminal apparatus 1 may also be configured to be a circuit. Each portion having reference numeral 30 to reference numeral 36 included in the base station apparatus 3 may also be configured to be a circuit. Part of or all of the portions having reference numeral 10 to reference numeral 16 included in the terminal apparatus 1 may also be configured to be a memory and a processor connected to the memory. Part of or all of the portions having reference numeral 30 to reference numeral 36 included in the base station apparatus 3 may also be configured to be a memory and a processor connected to the memory. Various schemes (operations and processes) according to the present invention may be implemented (performed) in the memories and the processors connected to the memories included in the terminal apparatus 1 and/or the base station apparatus 3.

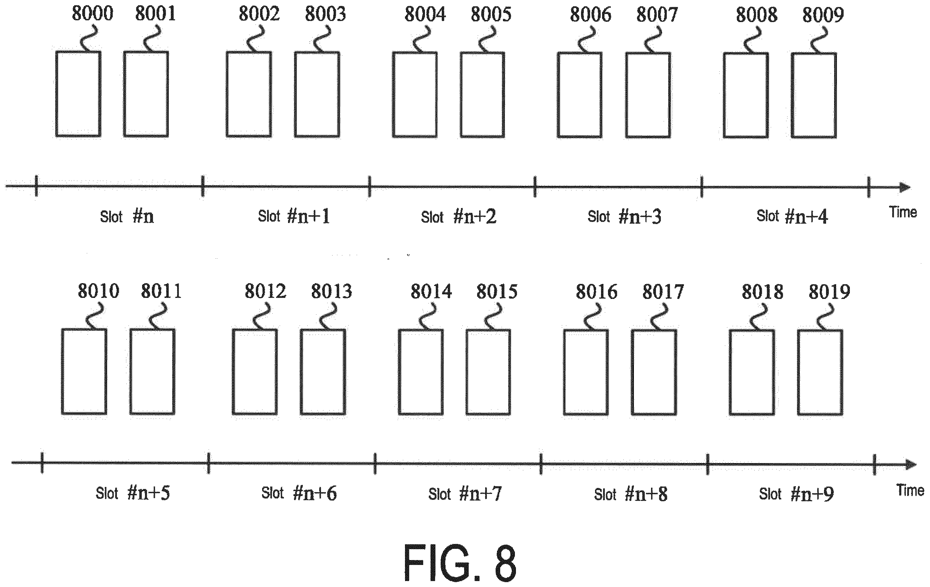

FIG. 8 is a diagram illustrating an example of candidate mapping of the SS/PBCH block according to an aspect of the present invention. In FIG. 8, a candidate 8000 for the SS/PBCH block and a candidate 8001 for the SS/PBCH block are mapped to slot n. In addition, a candidate 8002 for the SS/PBCH block and a candidate 8003 for the SS/PBCH block are mapped to slot n + 1. In addition, a candidate 8004 for the SS/PBCH block and a candidate 8005 for the SS/PBCH block are mapped to slot n + 2. In addition, a candidate 8006 for the SS/PBCH block and a candidate 8007 for the SS/PBCH block are mapped to slot n + 3. In addition, a candidate 8008 for the SS/PBCH block and a candidate 8009 for the SS/PBCH block are mapped to slot n + 4. In addition, a candidate 8010 for the SS/PBCH block and a candidate 8011 for the SS/PBCH block are mapped to slot n + 5. In addition, a candidate 8012 for the SS/PBCH block and a candidate 8013 for the SS/PBCH block are mapped to slot n + 6. In addition, a candidate 8014 for the SS/PBCH block and a candidate 8015 for the SS/PBCH block are mapped to slot n + 7. In addition, a candidate 8016 for the SS/PBCH block and a candidate 8017 for the SS/PBCH block are mapped to slot n + 8. In addition, a candidate 8018 for the SS/PBCH block and a candidate 8019 for the SS/PBCH block are mapped to slot n + 9.

Here, n is 0 or 5 in a slot index in a radio frame. That is, slot #n corresponds to a beginning slot of the radio frame or the sixth slot of the radio frame.

For example, when the subcarrier spacing configuration µ configured in the candidates for the SS/PBCH block is "0", the candidate 8000 for the SS/PBCH block to the candidate 8009 for the SS/PBCH block may be used. In addition, for example, when the subcarrier spacing configuration µ configured in the candidates for the SS/PBCH block is "1", the candidate 8000 for the SS/PBCH block to the candidate 8019 for the SS/PBCH block may be used.

The SS/PBCH block may be transmitted in any one of the candidates for the SS/PBCH block (or using any resource).

"Notified index" may be an index notified based on at least the payload of the PBCH included in the SS/PBCH block and/or the DMRS associated with the PBCH. For example, a notified index of an SS/PBCH block transmitted in the candidate 8000 for the SS/PBCH block may be 0. In addition, a notified index of an SS/PBCH block transmitted in the candidate 8001 for the SS/PBCH block may be 1. In addition, a notified index of an SS/PBCH block transmitted in the candidate 8002 for the SS/PBCH block may be 2. In addition, a notified index of an SS/PBCH block transmitted in the candidate 8003 for the SS/PBCH block may be 3. In addition, a notified index of an SS/PBCH block transmitted in the candidate 8004 for the SS/PBCH block may be 4. In addition, a notified index of an SS/PBCH block transmitted in the candidate 8005 for the SS/PBCH block may be 5. In addition, a notified index of an SS/PBCH block transmitted in the candidate 8006 for the SS/PBCH block maybe 6. In addition, a notified index of an SS/PBCH block transmitted in the candidate 8007 for the SS/PBCH block may be 7. In addition, a notified index of the candidate 8008 for the SS/PBCH block may be 8. In addition, a notified index of an SS/PBCH block transmitted in the candidate 8009 for the SS/PBCH block may be 9. In addition, a notified index of an SS/PBCH block transmitted in the candidate 8010 for the SS/PBCH block may be 10. In addition, a notified index of an SS/PBCH block transmitted in the candidate 8011 for the SS/PBCH block may be 11. In addition, a notified index of an SS/PBCH block transmitted in the candidate 8012 for the SS/PBCH block may be 12. In addition, a notified index of an SS/PBCH block transmitted in the candidate 8013 for the SS/PBCH block may be 13. In addition, a notified index of an SS/PBCH block transmitted in the candidate 8014 for the SS/PBCH block may be 14. In addition, a notified index of an SS/PBCH block transmitted in the candidate 8015 for the SS/PBCH block may be 15. In addition, a notified index of an SS/PBCH block transmitted in the candidate 8016 for the SS/PBCH block may be 16. In addition, a notified index of an SS/PBCH block transmitted in the candidate 8017 for the SS/PBCH block may be 17. In addition, a notified index of an SS/PBCH block transmitted in the candidate 8018 for the SS/PBCH block may be 18. In addition, a notified index of an SS/PBCH block transmitted in the candidate 8019 for the SS/PBCH block may be 19.

The notified index may be used for at least the terminal apparatus 1 to perform OFDM symbol-level synchronization. For example, respective intra-slot indexes of beginning OFDM symbols of the candidates 8000, 8002, 8004, 8006, 8008, 8010, 8012, 8014, 8016, and 8018 to which an SS/PBCH block is papped may also be configured to be a specific value (for example, 2 or 4). That is, a configuration of the intra-slot OFDM symbol index can be identified by detecting, by the terminal apparatus 1, an SS/PBCH block transmitted in any one of the candidates 8000, 8002, 8004, 8006, 8008, 8010, 8012, 8014, 8016, and 8018 for the SS/PBCH block. In addition, for example, respective intra-slot indexes of beginning OFDM symbols of the candidates 8001, 8003, 8005, 8007, 8009, 8011, 8013, 8015, 8017, and 8019 to which an SS/PBCH block is mapped may also be configured to be a specific value (for example, 8). That is, a configuration of the intra-slot OFDM symbol index can be identified by detecting, by the terminal apparatus 1, an SS/PBCH block transmitted in any one of the candidates 8001, 8003, 8005, 8007, 8009, 8011, 8013, 8015, 8017, and 8019 for the SS/PBCH block.

The notified index may be used for at least the terminal apparatus 1 to perform slot-level synchronization. For example, the terminal apparatus 1 detects an SS/PBCH block transmitted in either the candidate 8000 for the SS/PBCH block or the candidate 8001 for the SS/PBCH block, so that it can be identified that the detected SS/PBCH block is mapped to either a beginning slot in the radio frame or the sixth slot in the radio frame. In addition, the terminal apparatus 1 detects an SS/PBCH block transmitted in either the candidate 8002 for the SS/PBCH block or the candidate 8003 for the SS/PBCH block, so that it can be identified that the detected SS/PBCH block is mapped to either the second slot in the radio frame or the seventh slot in the radio frame. In addition, the terminal apparatus 1 detects an SS/PBCH block transmitted in either the candidate 8004 for the SS/PBCH block or the candidate 8005 for the SS/PBCH block, so that it can be identified that the detected SS/PBCH block is mapped to either the third slot in the radio frame or the eighth slot in the radio frame. In addition, the terminal apparatus 1 detects an SS/PBCH block transmitted in either the candidate 8006 for the SS/PBCH block or the candidate 8007 for the SS/PBCH block, so that it can be identified that the detected SS/PBCH block is mapped to either the fourth slot in the radio frame or the ninth slot in the radio frame. In addition, the terminal apparatus 1 detects an SS/PBCH block transmitted in either the candidate 8008 for the SS/PBCH block or the candidate 8009for the SS/PBCH block, so that it can be identified that the detected SS/PBCH block is mapped to either the fifth slot in the radio frame or the tenth slot in the radio frame.

That is, a notified index of a specific SS/PBCH block may also be at least associated with a time resource to which the specific SS/PBCH block is mapped. The terminal apparatus 1 detects a specific SS/PBCH block, so that the time resource to which the specific SS/PBCH block is mapped can be identified.

"Valid index" may be provided based on at least the notified index and/or the number L_{SSB} of SS/PBCH blocks that can be transmitted in a specific semi-radio frame.

Here, the semi-radio frame may be configured to include 5 subframes. In addition, the semi-radio frame may also consist of 5 subframes in the first half of the 10 subframes included in the radio frame. Here, the semi-radio frame may also consist of 5 subframes in the second half of the 10 subframes included in the radio frame.

For example, the valid index may meet a relationship provided based on at least valid index = mod(notified index, N_{Q}). For example, N_{Q} = L_{SSB} may hold. In addition, N_{Q} may also correspond to the number of beams that may be applied to the SS/PBCH block. In addition, N_{Q} may also correspond to the maximum number of SS/PBCH blocks having different large scale properties. In addition, N_{Q} may also be based on at least a value indicated by a value included in the PBCH. In addition, N_{Q} may also be based on at least a value indicated by a value included in the SIB1. Here, mod(A, B) is a function outputting a remainder acquired by dividing A by B. In addition, N_{Q} may also be provided for each measurement object.

For example, the valid index of the SS/PBCH block transmitted in the candidate 8000 for the SS/PBCH block may be 0. In addition, the valid index of the SS/PBCH block transmitted in the candidate 8001 for the SS/PBCH block may be 1. In addition, the valid index of the SS/PBCH block transmitted in the candidate 8002 for the SS/PBCH block may be 2. In addition, the valid index of the SS/PBCH block transmitted in the candidate 8003 for the SS/PBCH block may be 3. In addition, the valid index of the SS/PBCH block transmitted in the candidate 8004 for the SS/PBCH block may be 4. In addition, the valid index of the SS/PBCH block transmitted in the candidate 8005 for the SS/PBCH block may be 5. In addition, the valid index of the SS/PBCH block transmitted in the candidate 8006 for the SS/PBCH block may be 6. In addition, the valid index of the SS/PBCH block transmitted in the candidate 8007 for the SS/PBCH block may be 7. In addition, the valid index of the candidate 8008 for the SS/PBCH block may be 0. In addition, the valid index of the SS/PBCH block transmitted in the candidate 8009 for the SS/PBCH block may be 1. In addition, the valid index of the SS/PBCH block transmitted in the candidate 8010 for the SS/PBCH block may be 2. In addition, the valid index of the SS/PBCH block transmitted in the candidate 8011 for the SS/PBCH block may be 3. In addition, the valid index of the SS/PBCH block transmitted in the candidate 8012 for the SS/PBCH block may be 4. In addition, the valid index of the SS/PBCH block transmitted in the candidate 8013 for the SS/PBCH block may be 5. In addition, the valid index of the SS/PBCH block transmitted in the candidate 8014 for the SS/PBCH block may be 6. In addition, the valid index of the SS/PBCH block transmitted in the candidate 8015 for the SS/PBCH block may be 7. In addition, the valid index of the SS/PBCH block transmitted in the candidate 8016 for the SS/PBCH block may be 0. In addition, the valid index of the SS/PBCH block transmitted in the candidate 8017 for the SS/PBCH block may be 1. In addition, the valid index of the SS/PBCH block transmitted in the candidate 8018 for the SS/PBCH block may be 2. In addition, the valid index of the SS/PBCH block transmitted in the candidate 8019 for the SS/PBCH block may be 3.

For example, the valid index may also meet a relationship provided based on at least valid index = floor(notified index / N_{Q}). In addition, the valid index may also meet a relationship provided based on at least valid index = ceil(notified index / N_{Q}). floor(^{∗}) may be a round-down function for a real number ^{∗}. For example, floor(^{∗}) may be a function outputting the maximum integer within the range of no more than the real number ^{∗}. ceil(^{∗}) may be a round-up function for a real number ^{∗}. For example, ceil(^{∗}) may be a function outputting the minimum integer within the range of no less than the real number ^{∗}.

For example, a valid index for each SS/PBCH block may also be configured, so that valid indexes of SS/PBCH blocks transmitted in each of a plurality of candidates for the SS/PBCH block having consecutive indexes are equal. For example, valid indexes of SS/PBCH blocks transmitted in each of a plurality of candidates for the SS/PBCH block included in the same slot (or subframe) may also be configured to be the same.

For example, the valid index of the SS/PBCH block transmitted in the candidate 8000 for the SS/PBCH block may be 0. In addition, the valid index of the SS/PBCH block transmitted in the candidate 8001 for the SS/PBCH block may be 0. In addition, the valid index of the SS/PBCH block transmitted in the candidate 8002 for the SS/PBCH block may be 0. In addition, the valid index of the SS/PBCH block transmitted in the candidate 8003 for the SS/PBCH block may be 0. In addition, the valid index of the SS/PBCH block transmitted in the candidate 8004 for the SS/PBCH block may be 1. In addition, the valid index of the SS/PBCH block transmitted in the candidate 8005 for the SS/PBCH block may be 1. In addition, the valid index of the SS/PBCH block transmitted in the candidate 8006 for the SS/PBCH block may be 1. In addition, the valid index of the SS/PBCH block transmitted in the candidate 8007 for the SS/PBCH block may be 1. In addition, the valid index of the candidate 8008 for the SS/PBCH block may also be 2. In addition, the valid index of the SS/PBCH block transmitted in the candidate 8009 for the SS/PBCH block may be 2. In addition, the valid index of the SS/PBCH block transmitted in the candidate 8010 for the SS/PBCH block may be 2. In addition, the valid index of the SS/PBCH block transmitted in the candidate 8011 for the SS/PBCH block may be 2. In addition, the valid index of the SS/PBCH block transmitted in the candidate 8012 for the SS/PBCH block may be 3. In addition, the valid index of the SS/PBCH. block transmitted in the candidate 8013 for the SS/PBCH block may be 3. In addition, the valid index of the SS/PBCH block transmitted in the candidate 8014 for the SS/PBCH block may be 3. In addition, the valid index of the SS/PBCH block transmitted in the candidate 8015 for the SS/PBCH block may be 3. In addition, the valid index of the SS/PBCH block transmitted in the candidate 8016 for the SS/PBCH block may be 4. In addition, the valid index of the SS/PBCH block transmitted in the candidate 8017 for the SS/PBCH block may be 4. In addition, the valid index of the SS/PBCH block transmitted in the candidate 8018 for the SS/PBCH block may be 4. In addition, the valid index of the SS/PBCH block transmitted in the candidate 8019 for the SS/PBCH block may be 4.

The valid index of a specific SS/PBCH block may also be associated with the large scale property of the specific SS/PBCH block. For example, respective large scale properties of a plurality of SS/PBCH blocks having the same valid indexes may also be regarded as the same. The base station apparatus 3 may also apply the same beam to each of the plurality of SS/PBCH blocks having the same valid indexes.

The PDSCH is provided based on at least part of or all of scrambling, modulation, layer mapping, antenna port mapping, and mapping to physical resources. It may also be assumed that the terminal apparatus 1 provides the PDSCH based on at least part of or all of scrambling, modulation, layer mapping, antenna port mapping, and mapping to physical resources.

In scrambling, for a codeword q, a bit block b(^{q})(i) may also be scrambled based on at least a scrambling sequence c^{(q)}(i) to generate b^{(q)}_{sc}(i). The bit block b^{(q)}(i) may also correspond to one transport block. In the bit block b^{(q)}(i), i represents an integer value ranging from 0 to M^{(q)}_{bit} - 1. M^{(q)}_{bit} may be the number of bits of the codeword q transmitted by means of the PDSCH. The scrambling sequence c^{(q)}(i) may be a sequence provided based on at least a pseudo-random function (for example, an M sequence, a Gold sequence, etc.). In scrambling, for the codeword q, the bit block b^{(q)}_{sc}(i) may also be provided based on at least b^{(q)}_{sc}(i) = mod(b^{(q)}(i) + c^{(q)}(i), 2).

mod(A, B) may be a function outputting a remainder acquired by dividing A by B. mod(A, B) may also be a function outputting a value corresponding to the remainder acquired by dividing A by B.

In modulation, for the codeword, the scrambled bit block b^{(q)}_{sc}(i) may also be modulated based on a specific modulation scheme to generate a block d^{(q)}(i_{mod}) of a complex-valued modulation symbol. In the block d^{(q)}(i_{mod}) of the complex-valued modulation symbol, i_{mod} represents a value within the range of 0 to M^{(q)}_{symb}-1. M^{(q)}_{symb} may also be the number of complex-valued modulation symbols of the codeword q transmitted by means of the PDSCH. The specific modulation scheme may at least include part of or all of Quadrature Phase Shift Keying (QPSK), 16 Quadrature Amplitude Modulation (QAM), 64QAM, and 256QAM. Furthermore, the specific modulation scheme may also be provided based on at least DCI for scheduling the PDSCH.

In layer mapping, the block d^{(q)}(i_{mod}) of the complex-valued modulation symbol used for each codeword may also be mapped to one or more layers based on a specific mapping procedure so as to generate a block x(i_{layer}) of the complex-valued modulation symbol. In the block x(i_{layer}) of the complex-valued modulation symbol, i_{layer} represents a value within the range of 0 to M^{layer}_{symb}-1. M^{layer}_{symb} may also be the number of complex-valued modulation symbols of each layer. In the block x(i_{layer}) of the complex-valued modulation symbol, x(i_{layer}) = [x⁽⁰⁾(i_{layer}) ... x^{(v-1)}(i_{layer})] may also hold. Here, [^{∗}]^{T} may indicate that rows and columns of a matrix ^{∗} are transposed. The number of elements of the block x(i_{layer}) of the complex-valued modulation symbol may also correspond to the number of layers of all codewords transmitted on the PDSCH. Here, v is the number of layers used for the PDSCH.

In antenna port mapping, a block y^{(λ)}(iₐₚ) of the complex-valued modulation symbol = x^{(λ)}(i_{layer}) may also hold. iₐₚ represents a value within the range from 0 to M^{layer}_{symb}M^{layer}_{symb}-1. For example, iₐₚ = i_{layer} may also hold.

In mapping to physical resources (physical resource mapping), a block y^{(p)}(iₐₚ) of a complex-valued modulation symbol used for an antenna port p may be mapped to, prior to the subcarrier index k_{sc}, a resource element (k_{sc}, 1_{sym}) of a resource block allocated to the PDSCH, the resource element to which the block is mapped excluding resource elements satisfying at least part of or all of the following element A1 to element A3. Here, p may be an index of the antenna port. p represents a value within the range from 0 to P1. P corresponds to the number of antenna ports of the PDSCH. Here, performing mapping prior to the subcarrier index k_{sc} may also refer to performing mapping from k_{sc} to k_{sc} + M (M is a specific value) of symbol 1_{sym} of the resource element (k_{sc}, 1_{sym}), from k_{sc} to k_{sc} + M of symbol 1_{sym} + 1 of the resource element (k_{sc}, 1_{sym}), ..., and from k_{sc} to k_{sc} + M of symbol 1_{sym} + N (N is a specific value) of the resource element (k_{sc}, 1_{sym}).
Element A1): a resource element to which the DMRS associated with the PDSCH is mapped
Element A2): a resource element to which the DL PTRS is mapped
Element A3): a specific resource element

That is, a resource element to which the block y^{(p)}(iₐₚ) of the complex-valued modulation symbol used for the antenna port p is mapped may be included in the resource block allocated to the PDSCH, and is a resource element not satisfying at least element A1 to element A3.

The specific resource element may also be a resource element declared as not available for PDSCH. In addition, the specific resource elements may also include at least resource elements used for the transmitted SS/PBCH block.

The frequency-domain index k_{sc} and the time-domain index 1_{sym} included in the resource element (k_{sc}, 1_{sym}) are also referred to as an index pair. The index pair includes at least the frequency-domain index k_{sc} and the time-domain index 1_{sym}. The index pair may also not include the index p of the antenna port. The index pair of the resource element represented by the frequency-domain index k_{sc} and the time-domain index 1_{sym} is also referred to as an index pair (k_{sc}, 1_{sym}).

In element A3, the transmitted SS/PBCH block may also be provided based on at least a first higher layer parameter (ssbPositionInBurst). For example, the first higher layer parameter may also include N_{RRC} bits. For example, N_{RRC} may also be equal to N_{Q}. In addition, N_{RRC} may also be equal to the number of values which can be taken as the value of the valid index. It may also be assumed that the terminal apparatus 1 transmits one or more SS/PBCH blocks based on at least the first higher layer parameter.

The n^{th} bit of the first parameter may correspond to the m^{th} SS/PBCH block group. Here, for example, m = n may also hold. In addition, n = m-1 may also hold. The m^{th} SS/PBCH block group may also include one or more SS/PBCH blocks. For example, the m^{th} SS/PBCH block group may include one or more SS/PBCH blocks corresponding to valid index #m. In addition, the m^{th} SS/PBCH block group may include one or more SS/PBCH blocks corresponding to valid index #m-1.

For example, it may also be assumed that the terminal apparatus 1 transmits an initial signal block of index (m-1 + N_{Q} ^{∗} m) by configuring the n^{th} bit of the first parameter to be 1. In addition, the m^{th} SS/PBCH block group may also include at least the initial signal block of index (m-1 + N_{Q} ^{∗} m). Here, the value of m may range from 0 to Floor(NssB ÷ N_{Q}). In addition, m may also be a set of natural numbers including 0 below a quotient acquired by dividing N_{SSB} by N_{Q}. Here, N_{SSB} may also be the number of candidates for the SS/PBCH block included in the semi-radio frame.

For example, it may also be assumed that the terminal apparatus 1 transmits an initial signal block of index (m-1 + L_{SSB} ^{∗}m) by configuring the n^{th} bit of the first parameter to be 1. In addition, the m^{th} SS/PBCH block group may also include at least the initial signal block of index (m-1 + L_{SSB} ^{∗} m). Here, the value of m may range from 0 to Floor(L_{SSB} ÷ N_{Q}). In addition, m may also be a set of natural numbers including 0 below a quotient acquired by dividing L_{SSB} by N_{Q}.

For example, it may also be assumed that the terminal apparatus 1 transmits an initial signal block of index m ^{∗} N_{Q} + s by configuring the n^{th} bit of the first parameter to be 1. Here, the value of s may range from 0 to N_{Q}-1.

For example, it may also be assumed that the terminal apparatus 1 transmits an initial signal block of index m ^{∗} N_{Q} + s by configuring the n^{th} bit of the first parameter to be 1. Here, the value of s may range from 0 to L_{SSB} -1.

For example, when the n^{th} bit of the first higher layer parameter is configured to be a specific value, the transmitted SS/PBCH block may also include (or may also be regarded as including) one or more SS/PBCH blocks included in the m^{th} SS/PBCH block group. The transmitted SS/PBCH block including one or more SS/PBCH blocks included in the m^{th} SS/PBCH block group may also refer to that it is assumed that one or more SS/PBCH blocks included in the m^{th} SS/PBCH block group are transmitted by the terminal apparatus 1.

For example, for a PDSCH scheduled by the DCI format having the CRC scrambled based on the C-RNTI, when the n^{th} bit of the first higher layer parameter is configured to be a specific value, the transmitted SS/PBCH block may also include one or more SS/PBCH blocks included in the m^{th} SS/PBCH block group.

For example, for a PDSCH scheduled by the DCI format having the CRC scrambled based on the SI-RNTI, when the n^{th} bit of the first higher layer parameter is configured to be a specific value, the transmitted SS/PBCH block may also include one or more SS/PBCH blocks included in the m^{th} SS/PBCH block group. Here, the value of a system information indicator included in the DCI format may be set to be 1 (alternatively, the system information indicator may be configured to indicate that the PDSCH scheduled by means of the DCI format includes system information other than the SIB1).

For example, for a PDSCH scheduled by the DCI format having the CRC scrambled based on the SI-RNTI, the transmitted SS/PBCH block may also include an SS/PBCH block corresponding to a search space set in which the DCI format is detected. Here, the value of the system information indicator included in the DCI format may be set to be 0 (alternatively, the system information indicator may be configured to indicate that the PDSCH scheduled by means of the DCI format includes the SIB1).

For example, for a PDSCH scheduled by the DCI format having the CRC scrambled based on the RA-RNTI, when the n^{th} bit of the first higher layer parameter is configured to be a specific value, the transmitted SS/PBCH block may also include one or more SS/PBCH blocks included in the m^{th} SS/PBCH block group.

For example, for a PDSCH scheduled by the DCI format having the CRC scrambled based on the TC-RNTI, when the n^{th} bit of the first higher layer parameter is configured to be a specific value, the transmitted SS/PBCH block may also include one or more SS/PBCH blocks included in the m^{th} SS/PBCH block group.

For example, for a PDSCH scheduled by the DCI format having the CRC scrambled based on the P-RNTI, when the n^{th} bit of the first higher layer parameter is configured to be a specific value, the transmitted SS/PBCH block may also include one or more SS/PBCH blocks included in the m^{th} SS/PBCH block group.

Here, performing operation on an unlicensed frequency band may include at least part of or all of the following element 1 to element 4.
Element 1: provide a higher layer parameter indicating that operation is performed on the unlicensed frequency band
Element 2: set a serving cell so that operation is performed on the unlicensed frequency band
Element 3: set a carrier in the unlicensed frequency band
Element 4: cause the carrier to be included in the unlicensed frequency band

For example, when operation is performed on the unlicensed frequency band, for a PDSCH scheduled by the DCI format having the CRC scrambled based on the C-RNTI, when the n^{th} bit of the first higher layer parameter is configured to be a specific value, the transmitted SS/PBCH block may also include one or more SS/PBCH blocks included in the m^{th} SS/PBCH block group.

For example, when operation is performed on the unlicensed frequency band, for a PDSCH scheduled by the DCI format having the CRC scrambled based on the SI-RNTI, when the n^{th} bit of the first higher layer parameter is configured to be a specific value, the transmitted SS/PBCH block may also include one or more SS/PBCH blocks included in the m^{th} SS/PBCH block group. Here, the value of a system information indicator included in the DCI format may be set to be 1 (alternatively, the system information indicator may be configured to indicate that the PDSCH scheduled by means of the DCI format includes system information other than the SIB1).

For example, when operation is performed outside the unlicensed frequency band, for a PDSCH scheduled by the DCI format having the CRC scrambled based on the SI-RNTI, the transmitted SS/PBCH block may also include an SS/PBCH block corresponding to a search space set in which the DCI format is detected. Here, the value of the system information indicator included in the DCI format may be set to be 0 (alternatively, the system information indicator may be configured to indicate that the PDSCH scheduled by means of the DCI format includes the SIB1).

For example, when operation is performed outside the unlicensed frequency band, for a PDSCH scheduled by the DCI format having the CRC scrambled based on the RA-RNTI, when the n^{th} bit of the first higher layer parameter is configured to be a specific value, the transmitted SS/PBCH block may also include one or more SS/PBCH blocks included in the m^{th} SS/PBCH block group.

For example, for operation performed outside the unlicensed frequency band, and a PDSCH scheduled by the DCI format having the CRC scrambled based on the TC-RNTI, when the n^{th} bit of the first higher layer parameter is configured to be a specific value, the transmitted SS/PBCH block may also include one or more SS/PBCH blocks included in the m^{th} SS/PBCH block group.

For example, when operation is performed outside the unlicensed frequency band, for a PDSCH scheduled by the DCI format having the CRC scrambled based on the P-RNTI, when the n^{th} bit of the first higher layer parameter is configured to be a specific value, the transmitted SS/PBCH block may also include one or more SS/PBCH blocks included in the m^{th} SS/PBCH block group.

For example, when operation is performed outside the unlicensed frequency band, for a PDSCH scheduled by the DCI format having the CRC scrambled based on the C-RNTI, when the n^{th} bit of the first higher layer parameter is configured to be a specific value, the transmitted SS/PBCH block may also include an SS/PBCH block having a notified index corresponding to n.

For example, when operation is performed outside the unlicensed frequency band, for a PDSCH scheduled by the DCI format having the CRC scrambled based on the SI-RNTI, when the n^{th} bit of the first higher layer parameter is configured to be a specific value, the transmitted SS/PBCH block may also include an SS/PBCH block having a notified index corresponding to n. Here, the value of a system information indicator included in the DCI format may be set to be 1 (alternatively, the system information indicator may be configured to indicate that the PDSCH scheduled by means of the DCI format includes system information other than the SIB1).

For example, when operation is performed outside the unlicensed frequency band, for a PDSCH scheduled by the DCI format having the CRC scrambled based on the SI-RNTI, the transmitted SS/PBCH block may also be regarded as non-existent. Here, the value of the system information indicator included in the DCI format may be set to be 0 (alternatively, the system information indicator may be configured to indicate that the PDSCH scheduled by means of the DCI format includes the SIB1).

For example, when operation is performed outside the unlicensed frequency band, for a PDSCH scheduled by the DCI format having the CRC scrambled based on the RA-RNTI, when the n^{th} bit of the first higher layer parameter is configured to be a specific value, the transmitted SS/PBCH block may also include an SS/PBCH block having a notified index corresponding to n.

For example, when operation is performed outside the unlicensed frequency band, for a PDSCH scheduled by the DCI format having the CRC scrambled based on the TC-RNTI, when the n^{th} bit of the first higher layer parameter is configured to be a specific value, the transmitted SS/PBCH block may also include an SS/PBCH block having a notified index corresponding to n.

For example, when operation is performed outside the unlicensed frequency band, for a PDSCH scheduled by the DCI format having the CRC scrambled based on the P-RNTI, when the n^{th} bit of the first higher layer parameter is configured to be a specific value, the transmitted SS/PBCH block may also include an SS/PBCH block having a notified index corresponding to n.

The type 0 PDCCH common search space set monitored by the terminal apparatus 1 may also be a search space set corresponding to the SS/PBCH block detected by the terminal apparatus 1. For example, the search space set corresponding to the SS/PBCH block detected by the terminal apparatus 1 may also be a search space set respectively corresponding to one or more SS/PBCH blocks, and the one or more SS/PBCH blocks are included in an SS/PBCH block group corresponding to the valid index of the SS/PBCH block detected by the terminal apparatus 1.

For example, when operation is performed on the unlicensed frequency band, the search space set corresponding to the SS/PBCH block detected by the terminal apparatus 1 may also be a search space set respectively corresponding to one or more SS/PBCH blocks, and the one or more SS/PBCH blocks are included in an SS/PBCH block group corresponding to the valid index of the SS/PBCH block detected by the terminal apparatus 1.

For example, when operation is performed outside the unlicensed frequency band, the search space set corresponding to the SS/PBCH block detected by the terminal apparatus 1 may also be a search space set corresponding to an SS/PBCH block group corresponding to the notified index of the SS/PBCH block detected by the terminal apparatus 1.

The monitoring occasion for the type 2 PDCCH common search space set monitored by the terminal apparatus 1 may also be included in a radio frame (paging frame) satisfying mod(SFN + PF_offset, T) = div(T, N) ^{∗}mod(UE_ID, N). Here, for example, SFN may also be a number of the radio frame. In addition, PF_offset may be an offset of the paging frame, and is indicated based on at least a value included in a higher layer parameter. In addition, T may correspond to a period of a DRX cycle assigned to the terminal apparatus 1 in an idle state, and is indicated based on at least a value included in a higher layer parameter. In addition, N may be the number of paging occasions in the period T, and is indicated based on at least a value included in a higher layer parameter. UE_id may also be provided based on at least an identifier assigned to the terminal apparatus 1.

An index of one or more paging occasions included in a specific paging frame may also be provided by an integer value between 0 and Nₛ-1. A specific paging occasion may also include K_{SSB} monitoring occasions for the PDCCH.

For example, K_{SSB} may also be the number of transmitted SS/PBCH blocks.

For example, K_{SSB} may be included in the transmitted SS/PBCH block, and K_{SSB} is the number of SS/PBCH blocks having the same QCL among SS/PBCH blocks not assumed to pass through the terminal apparatus 1. In addition, K_{SSB} may also be the number of SS/PBCH block groups in which at least one SS/PBCH block is transmitted.

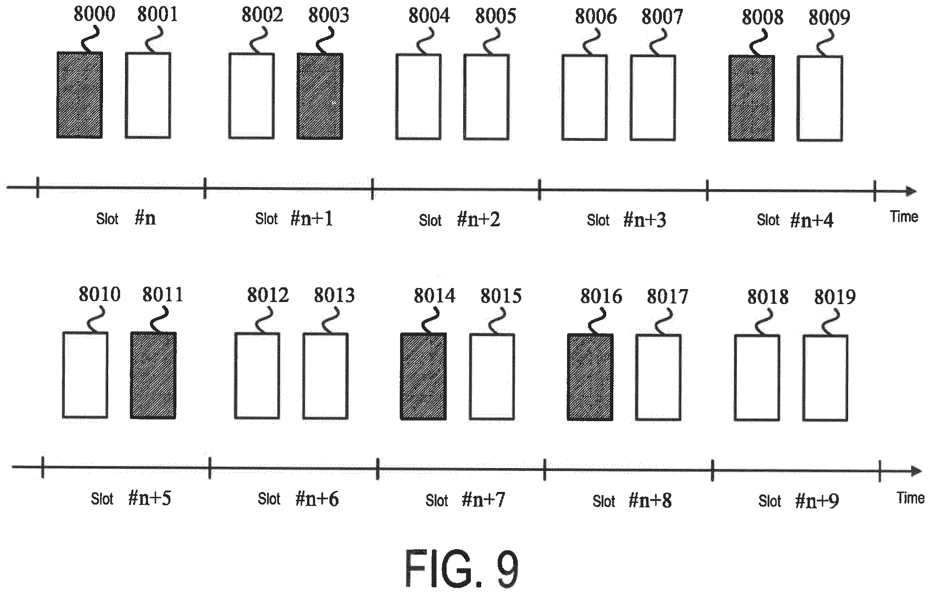

FIG. 9 is a diagram illustrating an example of transmission of the SS/PBCH block according to an aspect of the present invention. Furthermore, mapping of the SS/PBCH block candidates in FIG. 9 is the same as in FIG. 8, and therefore description thereof is omitted. Blocks indicated by diagonal lines in FIG. 9 are SS/PBCH blocks actually transmitted. Here, in an SS/PBCH block group corresponding to valid index #0, SS/PBCH blocks transmitted are SS/PBCH blocks 8000, 80008, and 8016. Here, in an SS/PBCH block group corresponding to valid index #1, no SS/PBCH block is transmitted. Here, in an SS/PBCH block group corresponding to valid index #2, no SS/PBCH block is transmitted. Here, in an SS/PBCH block group corresponding to valid index #3, SS/PBCH blocks transmitted are SS/PBCH blocks 8003 and 8011. Here, in an SS/PBCH block group corresponding to valid index #4, no SS/PBCH block is transmitted. Here, in an SS/PBCH block group corresponding to valid index #5, no SS/PBCH block is transmitted. Here, in an SS/PBCH block group corresponding to valid index #6, an SS/PBCH block transmitted is SS/PBCH block 80014. Here, in an SS/PBCH block group corresponding to valid index #7, no SS/PBCH block is transmitted. Here, the SS/PBCH block groups in which at least one SS/PBCH block is transmitted include the SS/PBCH block group corresponding to valid index #0, the SS/PBCH block group corresponding to valid index #3, and the SS/PBCH block group corresponding to valid index #6. That is, K_{SSB} may also be 3.

Configurations of various apparatuses according to an aspect of the present invention will be described below.
(1) In order to achieve the above objectives, the present invention uses the following schemes. That is, a first configuration of the present invention is a terminal apparatus, including: a configuration portion for configuring a higher layer parameter (ssbPositionlnBurst); and a receiving portion for receiving a PDSCH, wherein the n^{th} bit included in the higher layer parameter corresponds to the n^{th} initial signal block group; the n^{th} initial signal block group includes one or more initial signal blocks having a first index equal to n; when a second index for the one or more initial signal blocks is X, the first index for any one of the one or more initial signal blocks is acquired by dividing X by N_{Q}, and is provided based on at least that Y is added to the value; the second index is provided based on at least a PBCH included in any one of the one or more initial signal blocks and/or a DMRS associated with the PBCH; a complex modulation symbol block of the PDSCH is not mapped to an initial signal block transmitted in a resource allocated to the PDSCH; when the n^{th} bit included in the higher layer parameter is configured to be a specific value, the transmitted initial signal block includes the one or more initial signal blocks included in the n^{th} initial signal block group.
(2) In addition, a second configuration of the present invention is a terminal apparatus, including: a configuration portion for configuring a higher layer parameter (ssbPositionInBurst); and a receiving portion, for receiving the higher layer parameter indicating a time domain position of one or more initial signal blocks transmitted in an initial signal consisting of N_{SSB} initial signal blocks and receiving a PDSCH, wherein here, N is the number of candidates for the initial signal block included in a semi-radio frame; the semi-radio frame is configured to include any one of 5 subframes in the first half of or 5 subframes in the second half of 10 subframes included in a radio frame; according to the higher layer parameter, one or more initial signal blocks are assumed to be the transmitted, and it is assumed that a resource element used for the transmitted one or more initial signal blocks cannot be used for the PDSCH; configuring the n^{th} bit of the higher layer parameter to be 1 refers to that it is assumed that an initial signal block of index (n-1 + N_{Q} ^{∗} m) is transmitted; m = (0, ..., Floor(N_{SSB} ÷ N_{Q}, 1)), or m is a set of natural numbers including 0 below a quotient acquired by dividing N_{SSB} by N_{Q}.
(3) In addition, a third configuration of the present invention is a base station apparatus, including: a configuration portion for configuring a higher layer parameter (ssbPositionlnBurst); and a transmitting portion for transmitting a PDSCH, wherein the n^{th} bit included in the higher layer parameter corresponds to the n^{th} initial signal block group; the n^{th} initial signal block group includes one or more initial signal blocks having a first index equal to n; when a second index for the one or more initial signal blocks is X, the first index for any one of the one or more initial signal blocks is acquired by dividing X by N_{Q}, and is provided based on at least that Y is added to the value; the second index is provided based on at least a PBCH included in any one of the one or more initial signal blocks and/or a DMRS associated with the PBCH; a complex modulation symbol block of the PDSCH is not mapped to an initial signal block transmitted in a resource allocated to the PDSCH.
(4) A fourth configuration of the present invention is a communication method used for a terminal apparatus, including: the step of configuring a higher layer parameter (ssbPositionInBurst); and the step of receiving a PDSCH, wherein the n^{th} bit included in the higher layer parameter corresponds to the n^{th} initial signal block group; the n^{th} initial signal block group includes one or more initial signal blocks having a first index equal to n; when a second index for the one or more initial signal blocks is X, the first index for any one of the one or more initial signal blocks is acquired by dividing X by N_{Q}, and is provided based on at least that Y is added to the value; the second index is provided based on at least a PBCH included in any one of the one or more initial signal blocks and/or a DMRS associated with the PBCH; a complex modulation symbol block of the PDSCH is not mapped to an initial signal block transmitted in a resource allocated to the PDSCH.
(5) In addition, a fifth configuration of the present invention is a communication method used for a terminal apparatus, including: the step of configuring a higher layer parameter (ssbPositionInBurst); the step of receiving the higher layer parameter indicating a time domain position of the one or more initial signal blocks transmitted in an initial signal consisting of N_{SSB} initial signal blocks; and the step of receiving a PDSCH, wherein here, N is the number of candidates for the initial signal block included in a semi-radio frame; the semi-radio frame is configured to include any one of 5 subframes in the first half of or 5 subframes in the second half of 10 subframes included in a radio frame; the step of assuming, according to the higher layer parameter, one or more initial signal blocks to be the transmitted; and the step of assuming that a resource element used for the transmitted one or more initial signal blocks cannot be used for the PDSCH, wherein configuring the n^{th} bit of the higher layer parameter to be 1 refers to that it is assumed that an initial signal block of index (n-1 + N_{Q} ^{∗} m) is transmitted; m = (0, ..., Floor(N_{SSB} ÷ N_{Q}, 1)), or m is a set of natural numbers including 0 below a quotient acquired by dividing N_{SSB} by N_{Q}.
(6) In addition, a sixth configuration of the present invention is a communication method used for a base station apparatus, including: the step of configuring a higher layer parameter (ssbPositionInBurst); and the step of transmitting a PDSCH, wherein the n^{th} bit included in the higher layer parameter corresponds to the n^{th} initial signal block group; the n^{th} initial signal block group includes one or more initial signal blocks having a first index equal to n; when a second index for the one or more initial signal blocks is X, the first index for any one of the one or more initial signal blocks is acquired by dividing X by N_{Q}, and is provided based on at least that Y is added to the value; the second index is provided based on at least a PBCH included in any one of the one or more initial signal blocks and/or a DMRS associated with the PBCH; a complex modulation symbol block of the PDSCH is not mapped to an initial signal block transmitted in a resource allocated to the PDSCH.

A program running on the base station apparatus 3 and the terminal apparatus 1 according to the present invention may also be a program controlling a Central Processing Unit (CPU), etc., (a program causing a computer to implement a function) so as to implement the functions of the above embodiments according to the present invention. In addition, information processed in these apparatuses is temporarily stored in a Random Access Memory (RAM) during processing, is then stored in various Read Only Memories (ROMs) such as a Flash ROM and a Hard Disk Drive (HDD), and is read by the CPU according to requirements so that modification and writing-in are performed.

In addition, part of the terminal apparatus 1 and the base station apparatus 3 according to the above embodiments may also be implemented by the computer. In this case, this configuration may also be implemented by recording, on a computer-readable recording medium, a program used for implementing such control function and causing a computer system to read the program recorded on the recording medium and execute the same.

In addition, the "computer system" described herein is a computer system built in the terminal apparatus 1 or the base station apparatus 3 and including an OS and hardware such as a peripheral apparatus. Furthermore, the "computer-readable recording medium" refers to a portable medium such as a floppy disk, a magneto-optical disk, a ROM, a CD-ROM, etc., and a storage apparatus such as a hard disk built in the computer system.

Moreover, the "computer-readable recording medium" may further include a medium dynamically retaining a program for a short period of time, such as a communication line transmitting a program by means of a network such as the Internet or by means of a communication line such as a telephone line, and may further include a medium temporarily retaining a program, such as a volatile memory in the computer system and serving as a server or a client in the above case. Furthermore, the above program may be a program used to implement part of the above functions, and may also implement the above functions in combination with a program having already stored the above functions in the computer system.

In addition, the base station apparatus 3 according to the above embodiments may also be implemented as an aggregation (apparatus group) consisting of a plurality of apparatuses. Each of the apparatuses of which the apparatus group consists may include part of or all of functions or functional blocks of the base station apparatus 3 according to the above embodiments. The apparatus group is required to have all functions or functional blocks of the base station apparatus 3. Furthermore, the terminal apparatus 1 according to the above embodiments may also communicate with the base station apparatus serving as the aggregation.

In addition, the base station apparatus 3 according to the above embodiments may also be an Evolved Universal Terrestrial Radio Access Network (EUTRAN) and/or a NextGen RAN (NG-RAN or NR RAN). Furthermore, the base station apparatus 3 according to the above embodiments may also have part of or all of the functions of an upper node corresponding to an eNodeB and/or a gNB.

Furthermore, part of or all of the terminal apparatus 1 and the base station apparatus 3 according to the above embodiments may be implemented as an LSI which is a typical integrated circuit, or may also be implemented as a chip set. The functional blocks of the terminal apparatus 1 and the base station apparatus 3 may be individually implemented as a chip, or part of or all of the functional blocks may also be integrated into a chip. In addition, the circuit integration method is not limited to LSI, and the integrated circuits may be implemented as dedicated circuits or a general-purpose processor. Furthermore, with advances in semiconductor technology, a circuit integration technology with, which an LSI is replaced appears, and it is also possible to use an integrated circuit based on the technology.

Furthermore, according to the above embodiments, the terminal apparatus has been described as an example of a communication apparatus; however, the invention of the present application is not limited to this, and is also applicable to a terminal apparatus or a communication apparatus of a fixed-type or a stationary-type electronic apparatus mounted internally or externally, such as an AV apparatus, a kitchen apparatus, a cleaning/washing apparatus, an air-conditioning apparatus, office equipment, a vending machine, and other household apparatuses.

The embodiments of the present invention have been described in detail above with reference to the accompanying drawings; however, the specific configuration is not limited to the embodiments, and also includes a design modification, etc., without departing from the scope of the present invention. In addition, various modifications within the scope defined by the claims can be made to the present invention, and embodiments acquired by suitably combining technical schemes disclosed in different embodiments are also included in the technical scope of the present invention. In addition, a configuration acquired by substituting constituent elements disclosed in the above embodiments and producing the same effect for one another is also included in the technical scope of the present invention.

## Claims

1. A terminal apparatus, comprising:
a receiving portion for receiving a Physical Downlink Shared Channel, PDSCH, comprising a transport block; and
a transmitting portion for transmitting, on a Physical Uplink Control Channel, PUCCH, Hybrid Automatic Repeat reQuest-acknowledgemerit, HARQ-ACK, information corresponding to the transport block, wherein:
the PDSCH is allocated to first resources other than second resources;
the second resources comprise resources used for one or more Synchronization Signal, SS, /Physical Broadcast Channel, PBCH, blocks when an n^{th} bit of a higher layer parameter is set to a specific value;
the n^{th} bit corresponds to the one or more SS/PBCH blocks, where each of the one or more SS/PBCH blocks has a first index corresponding to (n-1);
the first index is determined by a remainder acquired by dividing a second index by a value indicated by a PBCH in each of the one or more SS/PBCH blocks; and
the second index is notified based on at least a reference signal of the PBCH in each of the one or more SS/PBCH blocks.

2. A base station apparatus, comprising:
a transmitting portion for transmitting a Physical Downlink Shared Channel, PDSCH, comprising a transport block; and
a receiving portion for receiving, on a Physical Uplink Control Channel, PUCCH, Hybrid Automatic Repeat reQuest-acknowledgement, HARQ-ACK information corresponding to the transport block,
wherein the PDSCH is allocated to first resources other than second resources;
the second resources comprise resources used for one or more Synchronization Signal, SS, /Physical Broadcast Channel, PBCH, blocks when the n^{th} bit of a higher layer parameter is set to a specific value;
the n^{th} bit corresponds to the one or more SS/PBCH blocks, where each of the one or more SS/PBCH blocks has a first index corresponding to (n-1);
the first index is determined by a remainder acquired by dividing a second index by a value indicated by a PBCH in each of the one or more SS/PBCH blocks; and
the second index is notified based on at least a reference signal of the PBCH in each of the one or more SS/PBCH blocks.

3. A method used by a terminal apparatus, the method comprising:
receiving a Physical Downlink Shared Channel, PDSCH, comprising a transport block; and
transmitting, on a Physical Uplink Control Channel, PUCCH, Hybrid Automatic Repeat reQuest-acknowledgement, HARQ-ACK, information corresponding to the transport block,
wherein:
the PDSCH is allocated to first resources other than second resources;
the second resources comprise resources used for one or more Synchronization Signal, SS, / Physical Broadcast Channel, PBCH, blocks when an n^{th} bit of a higher layer parameter is set to a specific value;
the n^{th} bit corresponds to the one or more SS/PBCH blocks, where each of the one or more SS/PBCH blocks has a first index corresponding to (n-1);
the first index is determined by a remainder acquired by dividing a second index by a value indicated by a PBCH in each of the one or more SS/PBCH blocks; and
the second index is notified based on at least a reference signal of the PBCH in each of the one or more SS/PBCH blocks.

4. A method used by a base station apparatus, the method comprising:
transmitting a Physical Downlink Shared Channel, PDSCH, comprising a transport block; and
receiving, on a Physical Uplink Control Channel, PUCCH, Hybrid Automatic Repeat reQuest-acknowledgement, HARQ-ACK, information corresponding to the transport block,
wherein:
the PDSCH is allocated to first resources other than second resources;
the second resources comprise resources used for one or more Synchronization Signal, SS, / Physical Broadcast Channel, PBCH, blocks when the n^{th} bit of a higher layer parameter is set to a specific value;
the n^{th} bit corresponds to the one or more SS/PBCH blocks, where each of the one or more SS/PBCH blocks has a first index corresponding to (n-1);
the first index is determined by a remainder acquired by dividing a second index by a value indicated by a PBCH in each of the one or more SS/PBCH blocks; and
the second index is notified based on at least a reference signal of the PBCH in each of the one or more SS/PBCH blocks.
